# FASCICULE DE BREVET EUROPEEN

(11) **EP 2 632 748 B1**
(45) Date de publication et mention de la délivrance du brevet: **20.08.2014**
(21) Numéro de dépôt: 11776162.7
(22) Date de dépôt: 27.10.2011
(51) Int. Cl.: B60H 1/00, B60H 1/14, B60H 1/32

(54) **DISPOSITIF DE CONDITIONNEMENT THERMIQUE D'UNE CHAÎNE DE TRACTION ET D'UN HABITACLE DE VÉHICULE**
VORRICHTUNG ZUR THERMISCHEN KONDITIONIERUNG EINES FAHRZEUGANTRIEBS UND EINES FAHRZEUGINNENRAUMS
DEVICE FOR THERMALLY CONDITIONING A VEHICLE DRIVETRAIN AND A VEHICLE CABIN

(30) Priorité: 29.10.2010 FR 1004258
(43) Date de publication de la demande: 04.09.2013
(73) Titulaire: Valeo Systemes Thermiques, 78321 Le Mesnil Saint Denis (FR)
(72) Inventeur: LABASTE MAUHE, Laurent, F-92140 Clamart (FR); HALLER, Régine, F-78490 Boissy-Sans-Avoir (FR); TAKLANTI, Abdelmajid, F-91190 Gif-sur-Yvette (FR)
(74) Mandataire: Rolland, Jean-Christophe
(86) Numéro de dépôt international: PCT/EP2011/068840
(87) Numéro de publication internationale: WO 2012/055956

(56) Documents cités:
- EP-A2- 0 888 912
- WO-A1-2008/127527
- FR-A1- 2 820 687
- US-A1- 2009 130 513

## Description

Le domaine technique de la présente invention est celui des véhicules à moteur, en particulier des véhicules à propulsion électrique. Plus particulièrement, l'invention vise un dispositif de conditionnement thermique assurant le conditionnement thermique de la chaîne de traction et de l'habitacle d'un tel véhicule.

Actuellement, les constructeurs automobiles développent des véhicules qui fonctionnent à partir de nouvelles sources d'énergie en complément ou en remplacement des véhicules à moteur thermique. En particulier, il est proposé des véhicules dont la propulsion est réalisée à partir de l'énergie électrique. Une telle une solution représente une alternative intéressante. Il est toutefois nécessaire d'embarquer différents composants liés à la chaîne de traction électrique tels que des batteries pour stocker l'énergie électrique, un moteur électrique pour assurer une propulsion du véhicule et un onduleur pour délivrer un signal électrique au moteur électrique.

La durée de vie et les performances de ces composants, en particulier les batteries, sont conditionnées par la température du milieu environnant. Il est donc nécessaire de garantir un maintien à une température déterminée de ces composants en phase de roulage du véhicule, c'est-à-dire quand les batteries se déchargent. Il faut également garantir un refroidissement de ces composants pendant les phases de rechargement, car elles se traduisent par un échauffement de ces composants.

En parallèle, il est nécessaire d'assurer le confort des passagers d'un habitacle d'un véhicule. A cet effet, il est nécessaire de modifier les paramètres aérothermiques de l'habitacle du véhicule. Il est, toutefois, nécessaire que le conditionnement de l'habitacle ne nuise pas à l'autonomie du véhicule de manière trop importante.

A cet effet, il a été proposé d'utiliser une boucle de climatisation dite « classique » activée par un compresseur électrique et dont la circulation du fluide réfrigérant est configurée pour permettre un chauffage ou refroidissement d'un flux d'air destiné à être envoyé dans l'habitacle du véhicule. Toutefois, une telle boucle de climatisation « classique » ne permet pas d'assurer pas le conditionnement thermique des composants de la chaîne de traction.

Il a également été proposé d'utiliser une boucle de climatisation dite « classique » qui échange avec une pluralité de boucles secondaires dans lesquelles circule un fluide caloporteur. Les boucles secondaires assurent le refroidissement des composants de la chaîne de traction, notamment la batterie et le moteur électrique. Toutefois, cette solution est d'une grande complexité, en particulier en ce qui concerne la commande des organes assurant l'interconnexion entre les boucles secondaires, en particulier lors d'un basculement entre les divers modes de fonctionnement.

Un autre dispositif de conditionnement thermique d'un type connu est divulgué par le document US 2009/130513 A1, qui est considéré comme l'art antérieur le plus proche.
Ce document divulgue un dispositif de conditionnement thermique comprenant une boucle de conditionnement comportant un circuit de fluide réfrigérant et un circuit de fluide caloporteur, le circuit de fluide réfrigérant comprenant au moins un compresseur, un échangeur de chaleur extérieur et un évaporateur, le circuit de fluide caloporteur comprenant au moins un échangeur de composant et un radiateur, un échangeur de chaleur fluide / fluide installé dans le circuit de fluide réfrigérant et dans le circuit de fluide caloporteur, le circuit de fluide caloporteur comprenant une première boucle et une deuxième boucle interconnectées par un dispositif d'interconnection, la première boucle comprenant l'échangeur de chaleur fluide / fluide, et la deuxième boucle comprenant l'échangeur de composant et le radiateur.
Ce système peut toutefois être amélioré pour améliorer la flexibilité du système et répondre à différentes situations de refroidissement des composants.

Le but de la présente invention est donc de résoudre l'inconvénient décrit précédemment, principalement en proposant une boucle de conditionnement comportant un circuit de réfrigérant et un circuit de fluide caloporteur dont la mise en oeuvre est simple, tout en garantissant le conditionnement thermique des composants de la chaîne de traction et de l'habitacle en toutes conditions, c'est-à-dire, notamment par temps chaud en été, par temps froid en hiver, par temps humide ou pendant la phase de charge des batteries.

L'invention a donc pour objet un dispositif de conditionnement thermique comprenant une boucle de conditionnement comportant un circuit de fluide réfrigérant et un circuit de fluide caloporteur. Le circuit de fluide réfrigérant comprend au moins un compresseur, un échangeur de chaleur intérieur, un échangeur de chaleur extérieur et un évaporateur. Par ailleurs, le circuit de fluide caloporteur comprend au moins un premier échangeur de composant et/ou un deuxième échangeur de composant, un troisième échangeur de composant et un radiateur. De plus, un échangeur fluide/fluide est installé dans le circuit de fluide réfrigérant et dans le circuit de fluide caloporteur.

Spécifiquement, le circuit de fluide caloporteur comprend une première boucle et une deuxième boucle interconnectées par un dispositif d'interconnexion, la première boucle comprenant l'échangeur fluide/fluide et le premier échangeur de composant et/ou le deuxième échangeur de composant et la deuxième boucle comprenant le premier échangeur de composant et/ou le troisième échangeur de composant et le radiateur.

Selon une caractéristique additionnelle, la première boucle comprend une première pompe de circulation du fluide caloporteur. De manière similaire, la deuxième boucle comprend une seconde pompe de circulation du fluide caloporteur. Avantageusement, les deux pompes sont distinctes.

Selon une autre caractéristique, la deuxième boucle comprend une conduite de contournement, dite troisième conduite de contournement, du radiateur, permettant au fluide caloporteur de circuler sans traverser le radiateur.

Avantageusement, l'échangeur de chaleur fluide/fluide est installé en parallèle de l'évaporateur. Ainsi, le fluide réfrigérant est apte à circuler dans l'échangeur de chaleur fluide/fluide et/ou dans l'évaporateur.

De plus, le circuit de fluide réfrigérant comprend un point de raccordement, dit cinquième point de raccordement, de l'évaporateur et de l'échangeur de chaleur fluide/fluide. Ainsi, le fluide réfrigérant ayant circulé dans l'échangeur de chaleur fluide/fluide et/ou dans l'évaporateur est regroupé afin de poursuivre la circulation dans le circuit de fluide réfrigérant.

Selon une variante de la présente invention, une conduite de contournement, dite première conduite de contournement, de l'échangeur de chaleur intérieur est prévue dans le circuit de fluide réfrigérant, permettant au fluide réfrigérant de circuler sans traverser l'échangeur de chaleur intérieur. De façon complémentaire ou alternative, une conduite de contournement, dite deuxième conduite de contournement, de l'échangeur de chaleur extérieur est prévue dans le circuit de fluide réfrigérant, permettant au fluide réfrigérant de circuler sans traverser l'échangeur de chaleur extérieur.

Avantageusement, un flux d'air intérieur est canalisé par un boîtier dans lequel sont disposés l'évaporateur et l'échangeur de chaleur intérieur afin d'être traversés par le flux d'air intérieur préalable à une distribution dans un habitacle d'un véhicule.

L'invention vise également les différents modes de fonctionnement ou configurations du circuit de fluide réfrigérant.

Notamment, une première configuration est telle que le fluide réfrigérant circule, dans le circuit de fluide réfrigérant, successivement, dans le compresseur la première conduite de contournement, l'échangeur de chaleur extérieur et/ou la deuxième conduite de contournement, l'évaporateur et/ou l'échangeur de chaleur fluide/fluide et le compresseur.

Alternativement, le fluide réfrigérant circule dans le circuit de fluide réfrigérant, successivement, dans le compresseur, l'échangeur de chaleur intérieur, l'échangeur de chaleur extérieur et/ou la deuxième conduite de contournement, l'évaporateur et/ou l'échangeur de chaleur fluide/fluide et le compresseur.

Une autre configuration est telle que le fluide réfrigérant circule dans le circuit de fluide réfrigérant, successivement, dans le compresseur, l'échangeur de chaleur intérieur et/ou la première conduite de contournement, l'échangeur de chaleur extérieur et/ou la deuxième conduite de contournement, et le compresseur.

De même, l'invention vise également les différents modes de fonctionnement ou configurations du circuit de fluide réfrigérant.

Notamment, une première variante est telle que le fluide caloporteur circule, dans le circuit de fluide caloporteur, successivement, dans le premier échangeur de composant, le dispositif d'interconnexion, l'échangeur de chaleur fluide/fluide, le deuxième échangeur de composant et le premier échangeur de composant.

Alternativement, le fluide caloporteur circule, dans le circuit de fluide caloporteur, successivement, dans le deuxième échangeur de composant, le dispositif d'interconnexion, l'échangeur de chaleur fluide/fluide et le deuxième échangeur de composant.

Selon une autre variante, le fluide caloporteur circule dans le circuit de fluide caloporteur, successivement, dans le premier échangeur de composant, le dispositif d'interconnexion, le troisième échangeur de composant, le radiateur et/ou la troisième de contournement, le dispositif d'interconnexion, l'échangeur de chaleur fluide/fluide, le deuxième échangeur de composant et le premier échangeur de composant.

De plus, le fluide caloporteur circule dans le circuit de fluide caloporteur, successivement, dans le dispositif d'interconnexion, le premier échangeur de composant, le troisième échangeur de composant, le radiateur et/ou la troisième de contournement, le dispositif d'interconnexion, l'échangeur de chaleur fluide/fluide, le deuxième échangeur de composant et le dispositif d'interconnexion.

De manière préférentielle, l'échangeur de chaleur fluide/fluide est intercalé entre l'échangeur de chaleur extérieur et/ou la troisième de contournement et le compresseur.

Selon la présente invention, le flux d'air intérieur est un flux d'air recyclé, issu de l'habitacle du véhicule, et/ou un flux d'air frais, extérieur à l'habitacle du véhicule.

Selon la présente invention, le circuit de fluide réfrigérant et le circuit de fluide réfrigérant sont aptes à être configurés selon les différents modes de fonctionnement en combinaison.

Les diverses configurations du circuit de fluide réfrigérant et du circuit de fluide caloporteur permettent, notamment, d'assurer :
- un mode dit « refroidissement », permettant de refroidir le flux d'air intérieur,
- un mode dit « chauffage », permettant de réchauffer le du flux d'air intérieur,
- un mode dit « déshumidification», permettant de déshumidifier le du flux d'air intérieur,
tout en assurant un conditionnement thermique d'au moins un des composants liés à la chaîne de traction électrique tels que des batteries pour stocker l'énergie électrique, un moteur électrique pour assurer la propulsion du véhicule et un onduleur pour adapter le signal électrique au moteur électrique.

La présente invention est particulièrement apte à fonctionner selon un mode de charge de la batterie dans lequel le fluide réfrigérant refroidit le fluide caloporteur au moyen de l'échangeur fluide/fluide.

Un premier avantage de la présente invention réside dans la possibilité de maintenir des conditions optimales dans l'utilisation des organes sensibles de la chaîne de traction quelque soit la phase d'utilisation du véhicule : arrêt, charge, roulage urbain ou roulage extra-urbain.

Un autre avantage réside dans la possibilité de limiter le vieillissement des composants de la chaîne de traction, en particulier la batterie grâce à un maintien à une température optimale pendant les phases de fonctionnement, y compris une phase de charge rapide, par exemple d'environ une heure.

Un autre avantage réside dans la garantie d'un niveau de confort thermique dans l'habitacle pour une grande plage de températures extérieures, notamment pour des températures extérieures comprises entre -10°C et +35°C.

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation mais aussi, le cas échéant, contribuer à sa définition sur lesquels:
- la figure 1 est une vue schématique d'un dispositif de conditionnement selon la présente invention en mode « déshumidification » selon une première variante,
- la figure 2 est une vue schématique du dispositif de conditionnement selon la présente invention en mode « déshumidification » selon une deuxième variante,
- la figure 3 est une vue schématique du dispositif de conditionnement selon la présente invention en mode « déshumidification » selon une troisième variante,
- la figure 4 est une vue schématique du dispositif de conditionnement selon la présente invention en mode « déshumidification » selon une quatrième variante,
- la figure 5 est une vue schématique du dispositif de conditionnement selon la présente invention en mode « été » selon un premier mode de réalisation,
- la figure 6 est une vue schématique du dispositif de conditionnement selon la présente invention en mode « été » selon un deuxième mode de réalisation,
- la figure 7 est une vue schématique du dispositif de conditionnement selon la présente invention en mode « été » selon un troisième mode de réalisation,
- la figure 8 est une vue schématique du dispositif de conditionnement selon la présente invention en phase de charge de batterie,
- la figure 9 est une vue schématique du dispositif de conditionnement selon la présente invention en mode « hiver » selon un premier mode de réalisation,
- la figure 10 est une vue schématique du dispositif de conditionnement selon la présente invention en mode « hiver » selon un deuxième mode de réalisation,
- la figure 11 est une vue schématique du dispositif de conditionnement selon la présente invention en mode « hiver » selon un troisième mode de réalisation,
- la figure 12 est une vue schématique du dispositif de conditionnement selon la présente invention en mode « hiver » selon un quatrième mode de réalisation,
- la figure 13 est une vue schématique d'une alternative du dispositif de conditionnement selon la présente invention, et
- la figure 14 est une vue schématique d'une variante de réalisation du dispositif selon la présente invention.

Dans l'ensemble des figures détaillant la présente invention et décrite ci-dessous, il a été adopté comme convention qu'une circulation de fluide est représentée en trait continu alors qu'une absence de circulation de fluide est représentée en trait interrompu.

Tel que présenté, un dispositif de conditionnement selon la présente invention comporte une boucle de conditionnement comprenant un circuit de fluide réfrigérant 1 et un circuit de fluide caloporteur 2.

Le circuit de fluide réfrigérant 1 est une boucle fermée à l'intérieure de laquelle circule un fluide réfrigérant. Le fluide réfrigérant peut être un fluide réfrigérant sous-critique, comme par exemple un composé fluoré, notamment celui connu sous l'appellation R134A. Le fluide réfrigérant peut également être un fluide réfrigérant supercritique, comme par exemple le dioxyde de carbone, connu sous l'appellation R744A.

Le fluide réfrigérant est mis en circulation par un compresseur 3 dont la fonction est d'augmenter la pression et la température du fluide réfrigérant. Le compresseur 3 est avantageusement électrique, en particulier adapté pour fonctionner selon une tension comprise entre 200 Volts et 500 Volts.

Par ailleurs, le compresseur 3 est par exemple un compresseur à pistons ou un compresseur à palettes ou un compresseur à spirale. De même, le compresseur 3 peut être à contrôle interne ou à contrôle externe.

Le compresseur 3 comprend un orifice d'entrée 4 par lequel arrive le fluide réfrigérant et un orifice de sortie 5 par lequel le fluide réfrigérant comprimé est évacué. L'orifice de sortie 5 est raccordé à un premier moyen de commutation 6, par exemple une première vanne 'trois-voies' 6, par l'intermédiaire d'une conduite, ou de tous moyens aptes à canaliser un fluide réfrigérant pour le transporter entre deux points du circuit de fluide réfrigérant 1.

La première vanne 'trois-voies' 6 comprend une voie d'entrée 7 raccordé au compresseur 3, une première voie de sortie 8 et une deuxième voie de sortie 9. La première vanne trois 6 contrôle la circulation du fluide réfrigérant de telle sorte à le diriger vers la première voie de sortie 8 et/ou vers la seconde voie de sortie 9.

La première voie de sortie 8 est raccordée à un orifice d'entrée d'un échangeur de chaleur intérieur 11. L'échangeur de chaleur intérieur 11 est apte à permettre un échange de calories avec un flux d'air intérieur 13 destiné à être envoyé à l'intérieur d'un habitacle d'un véhicule. En pratique, l'échangeur de chaleur intérieur 11 est installé dans un boîtier 12 dans lequel circule le flux d'air intérieur 13 envoyé dans l'habitacle du véhicule automobile.

Le boîtier 12 loge également un évaporateur 14, avantageusement disposé en amont de l'échangeur de chaleur intérieur 11 selon le sens de circulation du flux d'air 13. Optionnellement, un radiateur additionnel 15, par exemple un radiateur électrique 15, est installé dans boîtier 12, avantageusement en aval de l'échangeur de chaleur intérieur 11. Selon la présente invention, l'évaporateur 14 est intégré au circuit de fluide réfrigérant 1.

Préférentiellement, le flux d'air intérieur 13 traverse l'évaporateur 14 et/ou l'échangeur de chaleur intérieur 11 et/ou le radiateur additionnel 15. En conséquence, il ressort que l'échangeur de chaleur intérieur 11 est un échangeur air/fluide réfrigérant.

L'échangeur de chaleur intérieur 11 comprend un orifice de sortie raccordé par une conduite à un premier point de raccordement 17. Le premier point de raccordement 17 est également connecté à la deuxième voie de sortie 9 de la première vanne 'trois-voies' 6 par une première conduite de contournement 18.

La première conduite de contournement 18 permet au fluide réfrigérant de circuler directement du compresseur 3 vers le premier point de raccordement 17 sans traverser l'échangeur de chaleur intérieur 11 pour éviter tout échange de chaleur avec le flux d'air intérieur 13.

La circulation du fluide réfrigérant dans la première conduite de contournement 18 et/ou dans de chaleur l'échangeur intérieur 11 est placée sous la dépendance de la première vanne 'trois-voies' 6. A cet effet, la première vanne 'trois-voies' 6 est commandée, par exemple, par une stratégie de pilotage mise en oeuvre par un dispositif de contrôle non représenté.

Le premier point de raccordement 17 est raccordé à un organe de régulation 20 via un orifice d'entrée 24. Par ailleurs, selon la présente invention, un deuxième point de raccordement 19 est agencé entre le premier point de raccordement 17 et l'orifice d'entrée 24 de l'organe de régulation 20.

L'organe de régulation 20 comprend un premier organe de détente 22 et une première vanne de contrôle 23, agencés en parallèle l'un par rapport à l'autre. Le premier organe de détente 22 est, par exemple, un organe de détente thermostatique ou un détendeur électronique commandé par la stratégie de pilotage mise en oeuvre par le dispositif de contrôle. La première vanne de contrôle 23 est, par exemple, une vanne 'deux-voies' à commande progressive ou 'tout-ou-rien'.

L'organe de régulation 20 de la circulation du fluide réfrigérant présente un orifice de sortie 26 raccordé à un orifice d'entrée d'un échangeur de chaleur extérieur 28.

L'échangeur de chaleur extérieur 28 est apte à permettre l'échange des calories avec un flux d'air extérieur destiné à être envoyé à l'extérieur de l'habitacle du véhicule. Il s'agit donc d'un échangeur de chaleur air/fluide réfrigérant.

Selon les divers modes de fonctionnement de la présente invention, l'échangeur de chaleur extérieur 28 est apte à fonctionner en tant qu'évaporateur ou en tant que condenseur selon les configurations du circuit de fluide réfrigérant 1.

Préférentiellement, l'échangeur de chaleur extérieur 28 est installé en face avant du véhicule de sorte à bénéficier d'un flux d'air dynamique, en tant que flux d'air extérieur, quand le véhicule est en mouvement.

Le fluide réfrigérant sort de l'échangeur de chaleur extérieur 28 par un orifice de sortie avant de rejoindre une première voie d'entrée 30 d'un deuxième moyen de commutation 29, par exemple une deuxième vanne 'trois-voies' 29.

La deuxième vanne 'trois-voies' 29 comprend également une deuxième voie d'entrée 31. Selon l'exemple de réalisation de la présente invention, la deuxième voie d'entrée 31 de la deuxième vanne 'trois-voies' 29 est reliée au deuxième point de raccordement 19 afin de définir une deuxième conduite de contournement 25.

Ainsi, le fluide réfrigérant est susceptible de contourner l'échangeur de chaleur extérieur 28 en circulant au travers la deuxième conduite de contournement 25. La deuxième conduite de contournement 25 constitue un conduit empêchant ou réduisant la circulation de fluide réfrigérant dans l'échangeur de chaleur extérieur 28 de sorte à interdire ou réduire l'échange de chaleur dans l'échangeur de chaleur extérieur 28.

La circulation du fluide réfrigérant dans le deuxième conduite de contournement 25 ou dans l'échangeur de chaleur extérieur 28 est commandée par la deuxième vanne 'trois-voies' 29, commandée préférentiellement par la stratégie de pilotage mise en oeuvre par le dispositif de contrôle.

La deuxième vanne 'trois-voies' 29 comporte une voie de sortie 32 raccordée à l'évaporateur 14.

Le circuit de fluide réfrigérant 1 selon la présente invention comporte également un troisième point de raccordement 33 et un quatrième point de raccordement 35, agencés, consécutivement, entre la deuxième vanne 'trois-voies' 29 et l'évaporateur 14.

Le troisième point de raccordement 33 permet une circulation de fluide réfrigérant, en parallèle l'évaporateur 14, dans un échangeur de chaleur fluide/fluide 34. L'échangeur de chaleur fluide/fluide 34 assure un échange de chaleur entre le fluide réfrigérant circulant dans le circuit de fluide réfrigérant 1 et le fluide caloporteur circulant dans le circuit de fluide caloporteur 2.

En amont de l'évaporateur 14, selon le sens de circulation du fluide réfrigérant, est disposé un deuxième organe de détente 37. Préférentiellement, le deuxième organe de détente 37 est également disposé en aval, selon le sens de circulation du fluide réfrigérant, du quatrième point de raccordement 35.

Le quatrième point de raccordement 35 permet une alimentation en fluide réfrigérant d'une deuxième vanne de contrôle 36 et/ou du deuxième organe de détente 37.

Le deuxième organe de détente 37 est, par exemple, un organe de détente thermostatique ou encore un détendeur électronique commandé par la stratégie de pilotage mise en oeuvre par le dispositif de contrôle.

Après avoir traversé le deuxième organe de détente 37, le flux réfrigérant pénètre dans l'évaporateur 14 par l'intermédiaire d'un orifice d'entrée. L'abaissement de la pression du fluide réfrigérant opéré par le deuxième organe de détente 37 assure un échange de chaleur permettant un abaissement de la température et/ou un déshumidification du flux d'air intérieur 13 à la traversée de l'évaporateur 14.

Un orifice de sortie de l'évaporateur 14 est relié à un cinquième point de raccordement 40. De même, selon la présente invention, l'échangeur de chaleur fluide/fluide 34 et la deuxième vanne de contrôle 36 sont également reliés au cinquième point de raccordement 40. Le cinquième point de raccordement 40 permet de regrouper le fluide réfrigérant ayant traversé des parties différentes du circuit de fluide réfrigérant 1.

En conséquence, à l'inverse du premier point de raccordement 17, du deuxième point de raccordement 19, du troisième point de raccordement 33 et du quatrième point de raccordement 35 qui forment une jonction fluidique 'trois-points', le cinquième point de raccordement 40 forme une jonction fluidique 'quatre-points'. En pratique, le cinquième point de raccordement 40 est susceptible de recevoir le fluide réfrigérant par trois points et de restituer cette combinaison de fluide réfrigérant par un quatrième point.

Tel que présenté, l'échangeur de chaleur fluide/fluide 34 est agencé dans le circuit de fluide réfrigérant 1, d'un point de vue de la circulation du fluide réfrigérant, en parallèle de l'évaporateur 14, du deuxième organe de détente 37, du quatrième point de raccordement 35 et de la deuxième vanne de contrôle 36.

Entre le troisième point de raccordement 33 et l'échangeur de chaleur fluide/fluide 34, est agencé un troisième organe de détente 41. Le troisième organe de détente 41 est, par exemple, un organe de détente thermostatique ou un détendeur électronique commandé par la stratégie de pilotage mise en oeuvre par le dispositif de contrôle.

Après avoir été détendu par le troisième organe de détente 41, le fluide réfrigérant entre dans l'échangeur de chaleur fluide/fluide 34 par un orifice d'entrée. En traversant l'échangeur de chaleur fluide/fluide 34, le fluide réfrigérant échange de la chaleur avec le fluide caloporteur circulant également dans l'échangeur de chaleur fluide/fluide 34. Le fluide réfrigérant sort de l'échangeur de chaleur fluide/fluide 34 par un orifice de sortie avant de rejoindre le cinquième point de raccordement 40.

Le fluide réfrigérant provenant de l'échangeur de chaleur fluide/fluide 34 et/ou de l'évaporateur 14 et/ou de la deuxième vanne de contrôle 36 entre dans le cinquième point de raccordement 40. Le fluide réfrigérant en sort pour être dirigé vers le compresseur 3.

Avantageusement, un accumulateur 44 est agencé en amont du compresseur 3 et en aval du cinquième point de raccordement 40. Le fluide réfrigérant pénètre dans l'accumulateur 44 par une entrée directement raccordée au cinquième point de raccordement 40. L'accumulateur 44 comprend enfin une sortie par laquelle le fluide réfrigérant sort pour retourner vers le compresseur 3.

Selon la présente invention, la boucle de conditionnement comprend le circuit de fluide réfrigérant 1 et le circuit de fluide caloporteur 2. Le circuit de fluide caloporteur 2 forme une boucle fermée à l'intérieur de laquelle circule le fluide caloporteur, par exemple, un composé à base d'eau additionnée de glycol.

Le circuit de fluide caloporteur 2 est constitué d'une première boucle 47 et d'une deuxième boucle 48 en liaison mutuelle l'une à l'autre par un dispositif d'interconnexion 49. Le dispositif d'interconnexion 49 est réalisé, par exemple, sous la forme d'une vanne 'quatre-voies'.

Ainsi, en fonction de la phase de fonctionnement de la boucle de conditionnement thermique, la première boucle 47 et/ou la deuxième boucle 48 peuvent opérées de manière indépendante ou de manière conjointe.

La première boucle 47 forme un circuit dans lequel se trouvent une première pompe 50, un premier échangeur de composant 51, le dispositif d'interconnexion 49, l'échangeur de chaleur fluide/fluide 34 et un deuxième échangeur de composant 52, parcourus dans cet ordre par le fluide caloporteur.

La première pompe 50 est raccordée au premier échangeur de composant 51. Le premier échangeur de composant 51 est, par ailleurs, raccordé à un premier orifice d'entrée 57 du dispositif d'interconnexion 49.

Le dispositif d'interconnexion 49 comprend, en complément du premier orifice d'entrée 57 faisant partie de la première boucle 47, un deuxième orifice d'entrée 58 faisant partie de la deuxième boucle 48. Le dispositif d'interconnexion 49 comprend également un premier orifice de sortie 59 et un deuxième orifice de sortie 60 faisant partie, respectivement, de la deuxième boucle 48 et de la première boucle 47 du circuit de fluide caloporteur 2.

Le deuxième orifice de sortie 60 du dispositif d'interconnexion 49 est raccordé à l'échangeur de chaleur fluide/fluide 34. Le fluide caloporteur circule, successivement, dans l'échangeur de chaleur fluide/fluide 34 et dans le deuxième échangeur de composant 52.

A titre d'exemple selon le mode de réalisation présenté, le premier échangeur de composant 51 est un échangeur de chaleur entre le fluide caloporteur et un premier composant d'une chaîne de traction du véhicule. En particulier, le premier composant est un onduleur dont la fonction est de transformer le courant continu en provenance d'une batterie en courant alternatif triphasé pour alimenter le moteur de propulsion du véhicule.

De même, le deuxième échangeur de composant 52 est un échangeur de chaleur entre le fluide caloporteur et un deuxième composant de la chaîne de traction du véhicule. En particulier, le deuxième composant est une batterie, ou un ensemble de batteries, nécessaire pour stocker l'énergie électrique du véhicule. Selon l'exemple de réalisation présenté, le deuxième échangeur de composant 52 est raccordé à la première pompe 50.

Enfin, le troisième échangeur de composant 67 est un échangeur de chaleur entre le fluide caloporteur et un troisième composant d'une chaîne de traction du véhicule. En particulier, le troisième composant est le moteur de propulsion du véhicule, en particulier un moteur électrique.

Pour garantir la fiabilité, la durée de vie et les performances des divers composants de la chaîne de traction du véhicule, en particulier la batterie ou de l'ensemble de batteries, il est nécessaire d'assurer un conditionnement thermique de ces composants pour les maintenir dans une plage de températures déterminée quelque soit la phase de fonctionnement et/ou les conditions de roulage du véhicule. Par temps froid, il faut donc réchauffer le(s) composant(s) alors que, par temps chaud ou en phase de charge, il faut les refroidir.

De façon complémentaire, un premier vase d'expansion 65 est, avantageusement, raccordé, au circuit de fluide caloporteur 2, entre deuxième échangeur de composant 52 et la première pompe 50. Le premier vase d'expansion 65 forme une réserve de fluide caloporteur pour le circuit de fluide caloporteur 2.

La deuxième boucle 48 forme un circuit dans lequel se trouvent une deuxième pompe 66, le dispositif d'interconnexion 49, le troisième échangeur de composant 67, un x, par exemple une troisième vanne 'trois-voies' 68 et un radiateur 69, parcourus dans cet ordre par le fluide caloporteur.

Selon l'exemple présenté, la deuxième pompe 66 est, d'une part, raccordé au deuxième orifice d'entrée 58 du dispositif d'interconnexion 49. De même, le premier orifice de sortie 59 du dispositif d'interconnexion 49 est raccordé à un orifice d'entrée du troisième échangeur de composant 67.

La troisième vanne 'trois-voies' 68 est agencée en aval du troisième échangeur de composant 67, selon le sens de circulation du fluide caloporteur, et comprend une voie d'entrée 74 raccordée au troisième échangeur de composant 67. La troisième vanne 68 comprend également une première voie de sortie 75 et une deuxième voie de sortie 76. La deuxième voie de sortie 76 de la troisième vanne 68 est raccordée au radiateur 69.

Le radiateur 69 permet un échange de chaleur entre le flux d'air extérieur et le fluide caloporteur. Il est traversé par le flux d'air extérieur mis en mouvement par un ventilateur 78. Le radiateur 69 est donc un échangeur de chaleur air/fluide caloporteur.

La deuxième boucle 48 du circuit de fluide caloporteur 2 comporte également un sixième point de raccordement 80 agencé entre le radiateur 69 et la deuxième pompe 66.

Une troisième conduite de contournement 81 relie la troisième vanne 'trois-voies' 68 et le sixième point de raccordement 80. La circulation du fluide caloporteur à l'intérieur de la troisième conduite de contournement 81 est placée sous la dépendance de la troisième vanne 'trois-voies' 68, commandée par une stratégie de pilotage mise en oeuvre par le dispositif de contrôle non représenté.

Lorsque le fluide caloporteur passe par la troisième conduite de contournement 81, le débit de fluide caloporteur dans le radiateur 69 est réduit ou nul. Ainsi, l'échange de chaleur entre le fluide caloporteur et le flux d'air extérieur est réduit ou supprimé.

Avantageusement, le radiateur 69 est installé en face avant du véhicule de sorte à bénéficier du flux d'air dynamique, en tant que flux d'air extérieur, quand le véhicule est en mouvement en complément du flux d'air généré par le ventilateur 78.

Le radiateur 69 est susceptible d'être disposé en aval ou en amont, selon le sens de circulation du flux d'air extérieur, de l'échangeur de chaleur extérieur 28. Ainsi, l'échangeur de chaleur extérieur 28 et le radiateur 69 peuvent également bénéficier du flux d'air généré par le ventilateur 78 en complément du flux d'air dynamique.

Le flux d'air intérieur 13 qui circule dans le boîtier 12 est un flux d'air frais 83, prélevé à l'extérieur de l'habitacle, et/ou un flux d'air recyclé 84, prélevé à l'intérieur de l'habitacle du véhicule. La sélection de la proportion flux d'air extérieur 83 et/ou flux d'air recyclé 84 pénétrant dans le boîtier 12 pour former le flux d'air intérieur 13, est contrôlée par un moyen de sélection 82, par exemple un volet 82.

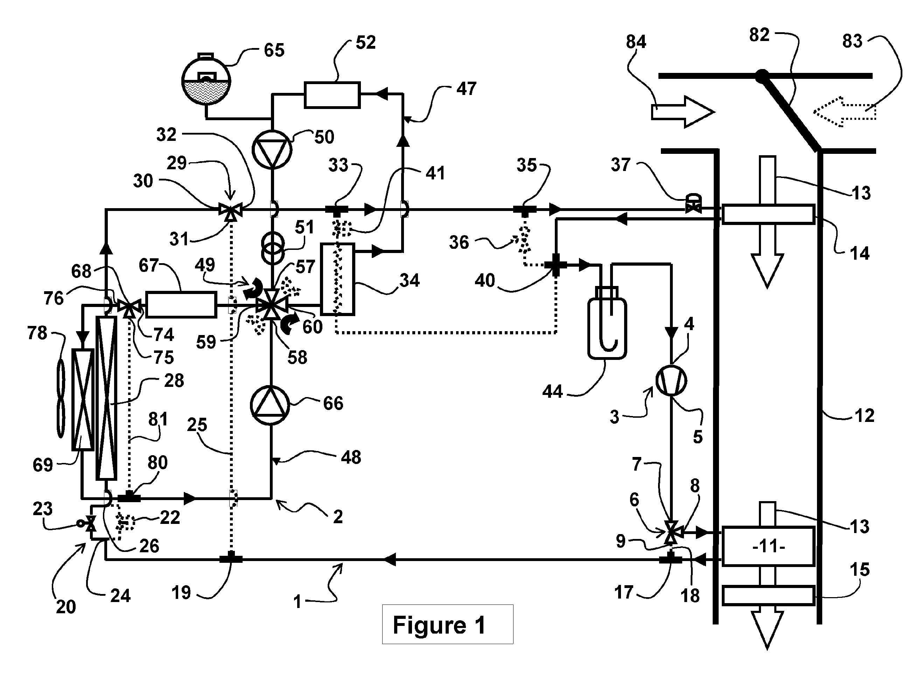

Plus particulièrement, la figure 1 est une vue schématique du dispositif de conditionnement selon la présente invention en mode « déshumidification » selon une première variante, par exemple quand la température extérieure est comprise entre 0°C et 5°C.

Dans cette configuration, le premier moyen de commutation 6, en particulier la première vanne 'trois-voies' 6, est agencé afin de permettre la circulation du fluide réfrigérant du compresseur 3 à travers l'échangeur de chaleur intérieur 11 en échangeant de la chaleur avec le flux d'air intérieur 13. Ainsi, la première vanne 'trois-voies' 6 est configurée de sorte à mettre en communication la voie d'entrée 7 avec la première voie de sortie 8. Ainsi, le fluide réfrigérant ne passe pas dans la première conduite de contournement 18.

En mode « déshumidification » selon une première variante, le fluide réfrigérant sort de l'échangeur de chaleur intérieur 11 et est dirigé vers l'organe de régulation 20. Dans cette configuration, le premier organe de détente 22 est fermé alors que la première valve de contrôle 23 est passante, autorisant un passage du fluide réfrigérant sans abaissement de pression. Le fluide réfrigérant traverse l'échangeur de chaleur extérieur 28, qui est susceptible de se comporter alors comme un condenseur, dans lequel le fluide réfrigérant échange avec le flux d'air extérieur.

Par suite, le fluide réfrigérant traverse, successivement, le deuxième moyen de commutation 29, en particulier la deuxième vanne 'trois-voies' 29, le troisième point de raccordement 33, le quatrième point de raccordement 35 et le deuxième organe de détente 37.

La configuration du deuxième moyen de commutation 29 est telle que la circulation dans le canal de contournement 31 est bloquée. Par suite, le fluide réfrigérant traverse le troisième point de raccordement 33.

Le troisième organe de détente 41 est fermé de sorte à empêcher toute circulation de fluide réfrigérant dans l'échangeur de chaleur fluide/fluide 34. De même, selon cette configuration, la deuxième vanne de contrôle 36 est également fermée.

Entre l'orifice de sortie 5 du compresseur 3 et le deuxième organe de détente 37, le fluide réfrigérant est à haute pression et haute température.

Le deuxième organe de détente 37 abaisse la pression du fluide réfrigérant. Le fluide réfrigérant se vaporise en échangeant avec le flux d'air intérieur 13 à la traversée de l'évaporateur 14. Un tel échange de chaleur permet d'assurer un assèchement et/ou une déshumidification du flux d'air intérieur 13.

Enfin, le fluide réfrigérant sort de l'évaporateur 14, traverse le cinquième point de raccordement 40, optionnellement l'accumulateur 44, pour retourner au compresseur 3.

Entre le deuxième organe de détente 37 et l'entrée 4 du compresseur 3, le fluide réfrigérant est à basse pression et basse température.

D'autre part, le fluide caloporteur est mis en mouvement par la première pompe 50 et/ou par la seconde pompe 66. Il traverse le dispositif d'interconnexion 49 en passant du premier orifice d'entrée 57 vers le premier orifice de sortie 59 puis traverse le troisième échangeur de composant 67, le troisième moyen de commutation 68, en particulier la troisième vanne 'trois-voies' 68 en passant de la voie d'entrée 74 vers la deuxième voie de sortie 76.

Le fluide caloporteur traverse alors le radiateur 69, où il cède des calories au flux d'air extérieur. Par suite, le fluide caloporteur passe par le sixième point de raccordement 80, la deuxième pompe 66 pour entrer dans le dispositif d'interconnexion 49 par le deuxième orifice d'entrée 58.

Le fluide caloporteur sort par le deuxième orifice de sortie 60 pour entrer et traverser l'échangeur de chaleur fluide/fluide 34. Dans cette phase de fonctionnement, le fluide caloporteur ne subit pas d'échange thermique avec le fluide réfrigérant puisque ce dernier ne circule pas au travers de l'échangeur de chaleur fluide/fluide 34.

Enfin, le fluide caloporteur traverse le deuxième échangeur de composant 52, puis la première pompe 50 et le premier échangeur de composant 51.

En traversant le premier échangeur de composant 51, le deuxième échangeur de composant 52 et le troisième échangeur de composant 67, le fluide caloporteur conditionne, en particulier refroidit, les composants associés, en l'occurrence avantageusement la batterie ou l'ensemble de batteries et/ou l'onduleur et/ou le moteur. Ainsi, le fluide caloporteur se réchauffe

On constate qu'au cours de cette phase de fonctionnement correspondant à une déshumidification du flux d'air intérieur 13, la première boucle 47 et la deuxième boucle 48 sont connectées fluidiquement par le dispositif d'interconnexion 49. Le fluide caloporteur puise ainsi les calories au niveau du premier échangeur de composant 51 et/ou du deuxième échangeur de composant 52 et/ou du troisième échangeur de composant 67. Les calories sont dissipées dans le flux d'air extérieur au moyen du radiateur 69.

De plus, avantageusement, le moyen de sélection 82 interdit l'introduction du flux d'air frais 83 et autorise l'introduction du flux d'air recyclé 84 dans le boîtier 12.

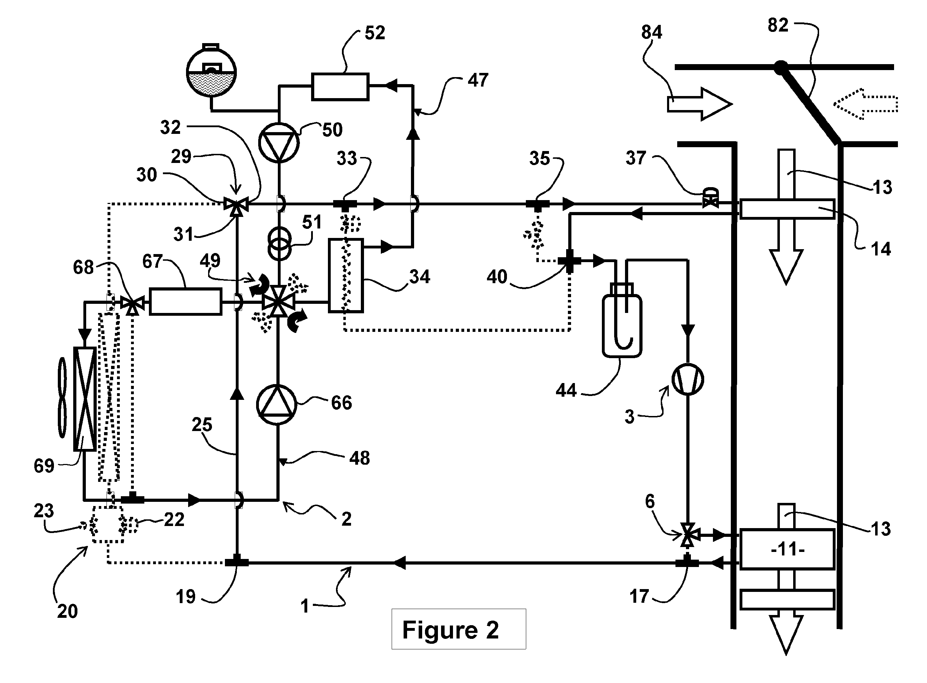

Les figures 2 à 4 présentent la présente invention en mode « déshumidification » selon diverses variantes. En conséquence, les figures 2 à 4 seront décrites quant aux différences par rapport à la figure 1. Les éléments précédemment décrits et fonctionnant dans les mêmes conditions ne seront pas décrits plus en détails et on se reportera à la description de la figure 1 à cet effet.

La figure 2 est une vue schématique du dispositif de conditionnement selon la présente invention en mode « déshumidification » selon une deuxième variante. En conséquence, la figure 2 illustre une phase de fonctionnement identique à celle de la figure 1.

Contrairement à la figure 1, le fluide réfrigérant ne traverse pas l'organe de régulation 20 et l'échangeur de chaleur extérieur 28. Le fluide réfrigérant circule alors dans la deuxième conduite de contournement 25. A cet effet, la deuxième vanne 'trois-voies' 29 est configurée de sorte à bloquer le passage du fluide réfrigérant par la première voie d'entrée 30.

En complément ou en alternative, l'organe de régulation 20 peut également être configuré de sorte à bloquer le passage de fluide réfrigérant à travers le premier organe de détente 22 et la première vanne de contrôle 23.

La configuration du dispositif de conditionnement selon la deuxième variante en mode « déshumidification » présente un avantage particulier par temps froid, notamment en hiver. En effet, selon cet agencement, la totalité de la condensation du fluide réfrigérant s'effectue dans l'échangeur de chaleur intérieur 11. Ainsi, toutes les calories issues de la condensation sont dissipées par le flux d'air intérieur 13 diffusé vers l'habitacle. Il n'y a pas de rejet de calories par l'intermédiaire du flux d'air extérieur. Il n'y a donc pas de perte d'énergie. Il existe donc une rationalisation de l'énergie embarquée.

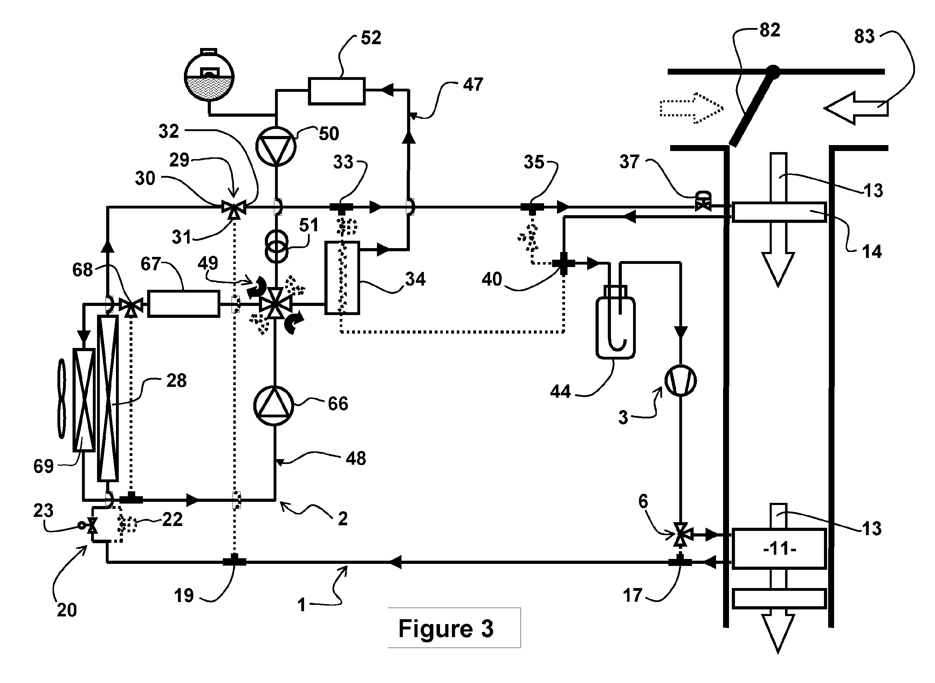

La figure 3 est une vue schématique du dispositif de conditionnement selon la présente invention en mode « déshumidification » selon une troisième variante. Ainsi, la figure 3 illustre la phase de fonctionnement identique à celle de la figure 1.

La différence par rapport à la configuration décrite à la figure 1 réside dans la position du moyen de sélection 82. En effet, le moyen de sélection 82 interdit l'introduction du flux d'air recyclé 84 et autorise l'introduction du flux d'air frais 83 dans le boîtier 12.

La configuration du dispositif de conditionnement selon la troisième variante en mode « déshumidification » présente un avantage particulier pour assurer un confort optimal des occupants de l'habitacle.

En effet, selon la position du moyen de sélection 82 selon les figures 1 et 2, dit position « recyclage », assure uniquement l'introduction du flux d'air recyclé 84 dans le boîtier 12. Un tel agencement propose une solution technique permettant d'améliorer le rendement du dispositif de conditionnement dans des conditions climatiques extérieures particulièrement défavorables, par exemple lors que la température extérieure est inférieure à 5°C.

Cependant, une position « recyclage » prolongée peut nuire au confort car le renouvellement du flux d'air intérieur 13 n'est pas assuré et l'assèchement de celui-ci peut être ressenti par les occupants de façon trop intense.

Par conséquent, pour des conditions extérieures plus favorables, il est préconisé d'assurer l'introduction du flux d'air frais 83 par l'agencement du moyen de sélection 82 en position « air extérieur », telle que présentée sur la figure 3.

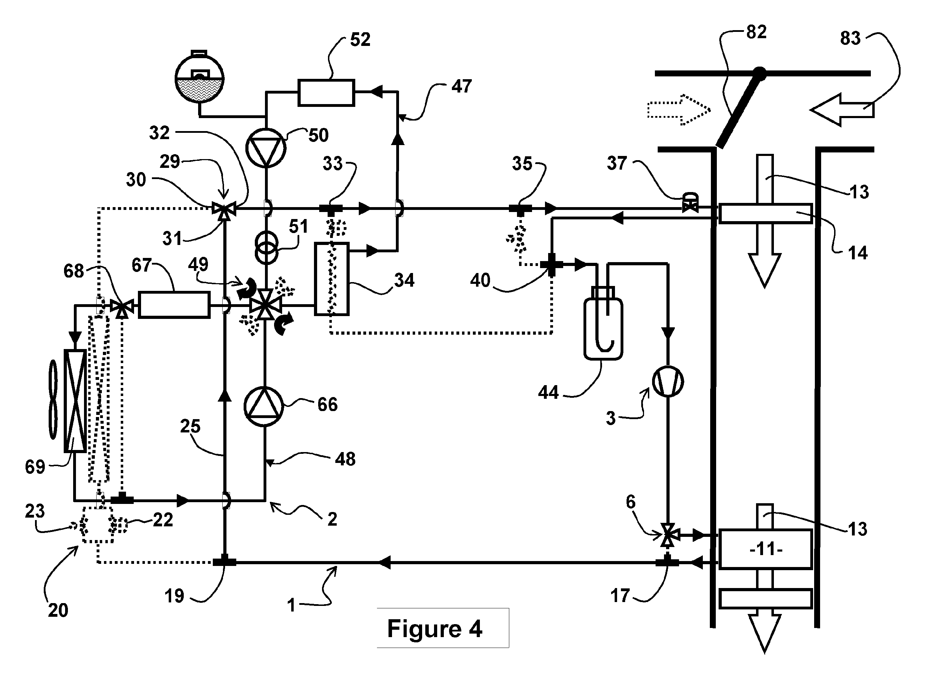

La figure 4 est une vue schématique du dispositif de conditionnement selon la présente invention en mode « déshumidification » selon une quatrième variante. Ainsi, la figure 4 illustre la phase de fonctionnement identique à celle de la figure 2.

La différence par rapport à la configuration décrite à la figure 2 réside dans la position du moyen de sélection 82. En effet, le moyen de sélection 82 interdit l'introduction du flux d'air recyclé 84 et autorise l'introduction du flux d'air frais 83 dans le boîtier 12 en provenance de l'extérieur de l'habitacle du véhicule.

La configuration du dispositif de conditionnement selon la quatrième variante en mode « déshumidification » présente le même avantage de rationalisation de l'énergie embarquée, tel que décrit en relation avec la figure 2.

Les configurations décrites en relation avec les figures 1 à 4 trouvent une application particulièrement avantageuse pour des conditions climatiques tempérées, potentiellement humides. En effet, les figures 1 à 4 présentent le dispositif de conditionnement selon la présente invention selon diverses variantes du mode « déshumidification ».

En dehors des conditions climatiques rendant nécessaire le mode « déshumidification », un tel mode « déshumidification » n'est plus un paramètre déterminant dans la gestion du confort. Il est alors envisagé de basculer dans d'autres modes de fonctionnement qui vont être maintenant être décrits.

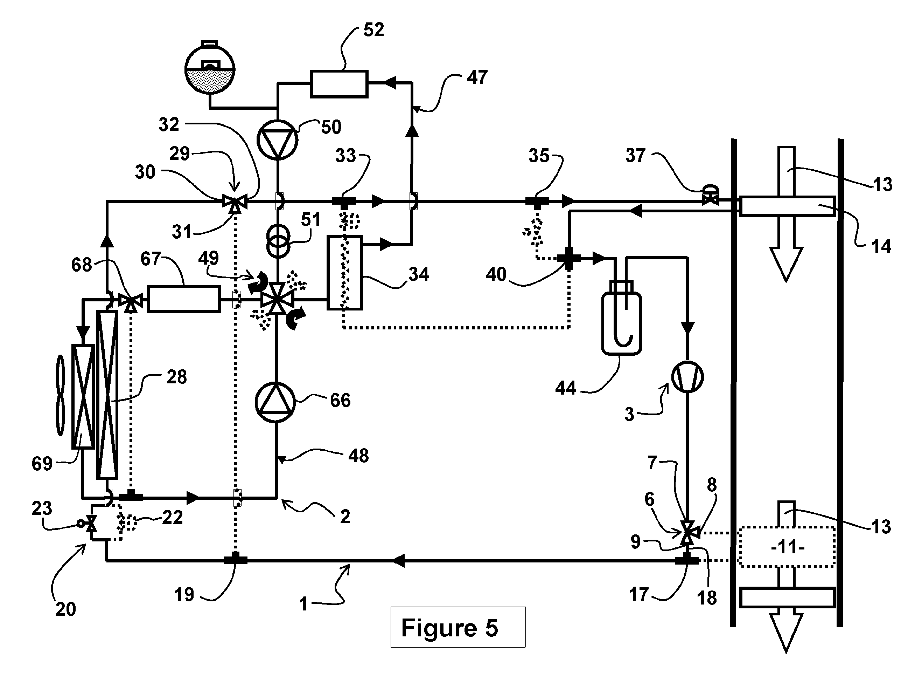

La figure 5 est une vue schématique du dispositif de conditionnement en mode « été » selon un premier mode de réalisation. La figure 5 illustre donc le dispositif de conditionnement selon la présente invention pendant une phase de fonctionnement dite « été » correspondant à un besoin en refroidissement de l'habitacle du véhicule selon une première mode de réalisation.

Selon le premier mode de réalisation du mode « été », le premier moyen de commutation 6, en particulier la première vanne 'trois-voies' 6, est agencé de sorte que le fluide réfrigérant passe directement du compresseur 3 vers le premier point de raccordement 17, à travers du passage de contournement 18. Ainsi, le fluide réfrigérant ne circule pas dans l'échangeur de chaleur intérieur 11. Le fluide réfrigérant ne subit pas de perte de charge à la traversée l'échangeur de chaleur intérieur 11. Il est donc susceptible de conserver son niveau de pression et de température.

Le fluide réfrigérant sort du compresseur 3 et est dirigé depuis le premier point de raccordement 17 en direction de l'organe de régulation 20. Dans cette configuration, le premier organe de détente 22 est fermé alors que la première vanne de contrôle 23 est passante, autorisant le passage du fluide réfrigérant sans abaissement de pression. Le fluide réfrigérant traverse ensuite l'échangeur de chaleur extérieur 28, qui est susceptible de se comporter alors comme un condenseur, dans lequel le fluide réfrigérant échange avec le flux d'air extérieur.

Par suite, le fluide réfrigérant traverse, successivement, le deuxième moyen de commutation 29, en particulier la deuxième vanne 'trois-voies' 29, le troisième point de raccordement 33, le quatrième point de raccordement 35 et le deuxième organe de détente 37.

La configuration du deuxième moyen de commutation 29 est telle que la circulation dans le canal de contournement 31 est ainsi bloquée.

De même, le fluide réfrigérant traverse le troisième point de raccordement 33. Le troisième organe de détente 41 est fermé de sorte à empêcher toute circulation de fluide réfrigérant dans l'échangeur de chaleur fluide/fluide 34. Par ailleurs, la deuxième vanne de contrôle 36 est également fermée.

Entre l'orifice de sortie 5 du compresseur 3 et le deuxième organe de détente 37, le fluide réfrigérant est à haute pression et haute température.

Le deuxième organe de détente 37 abaisse la pression du fluide réfrigérant. Le fluide réfrigérant se vaporise en échangeant avec le flux d'air intérieur 13 à la traversée de l'évaporateur 14. Un tel échange de chaleur permet d'assurer un assèchement et/ou une déshumidification du flux d'air intérieur 13.

Enfin, le fluide réfrigérant sort de l'évaporateur 14, traverse le cinquième point de raccordement 40, optionnellement l'accumulateur 44, pour retourner au compresseur 3.

Entre le deuxième organe de détente 37 et l'entrée 4 du compresseur 3 ,le fluide réfrigérant est à basse pression et basse température.

D'autre part, le fluide caloporteur est mis en mouvement par la première pompe 50 et/ou par la seconde pompe 66. Il traverse le dispositif d'interconnexion 49 en passant du premier orifice d'entrée 57 vers le premier orifice de sortie 59 puis traverse le troisième échangeur de composant 67, le troisième moyen de commutation 68, en particulier la troisième vanne 'trois-voies' 68 en passant de la voie d'entrée 74 vers la seconde voie de sortie 76.

Le fluide caloporteur traverse alors le radiateur 69, où il cède des calories au flux d'air extérieur. Par suite, le fluide caloporteur passe par le sixième point de raccordement 80, la seconde pompe 66 pour entrer dans le dispositif d'interconnexion 49 par le deuxième orifice d'entrée 58.

Le fluide caloporteur sort par le second orifice de sortie 60 pour entrer et traverser l'échangeur de chaleur fluide/fluide 34. Dans cette phase de fonctionnement, le le fluide caloporteur ne subit pas d'échange thermique puisque le fluide réfrigérant ne circule pas au travers de l'échangeur de chaleur fluide/fluide 34.

Enfin, le fluide caloporteur traverse le deuxième échangeur de composant 52, puis la première pompe 50 et le premier échangeur de composant 51.

En traversant le premier échangeur de composant 51, le deuxième échangeur de composant 52 et le troisième échangeur de composant 67, le fluide caloporteur conditionne, en particulier refroidit, les composants associés, en l'occurrence avantageusement la batterie ou l'ensemble de batteries et/ou l'onduleur et/ou le moteur. Ainsi, le fluide caloporteur se réchauffe.

On constate qu'au cours de cette phase de fonctionnement correspondant à un refroidissement du flux d'air intérieur 13, la première boucle 47 et la deuxième boucle 48 sont connectées fluidiquement par le dispositif d'interconnexion 49. Le fluide caloporteur puise ainsi les calories au niveau du premier échangeur de composant 51 et/ou le deuxième échangeur de composant 52 et/ou le troisième échangeur de composant 67. Les calories sont dissipées dans le flux d'air extérieur au moyen du radiateur 69.

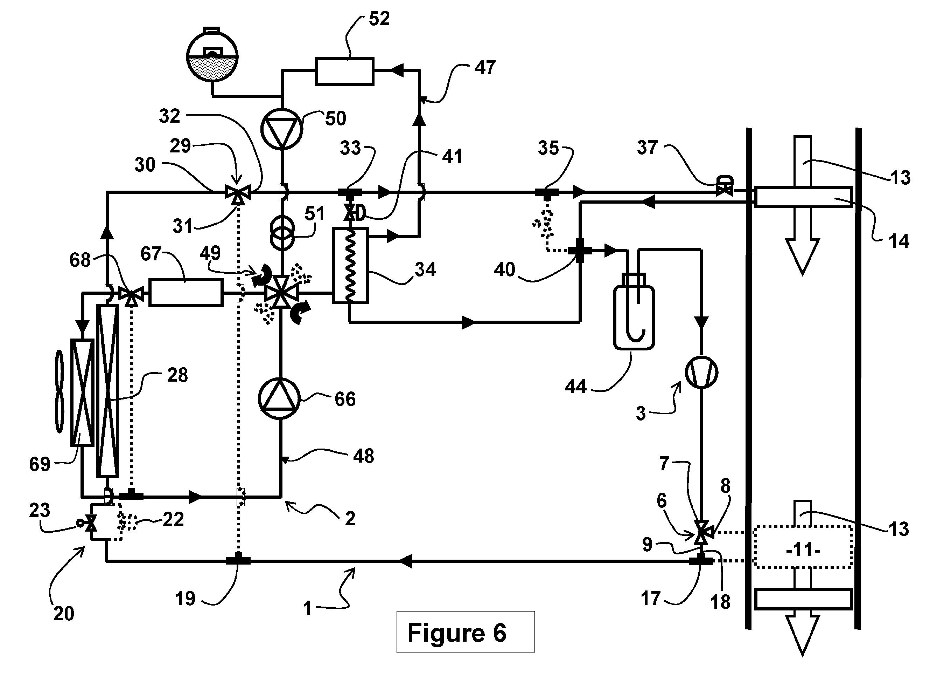

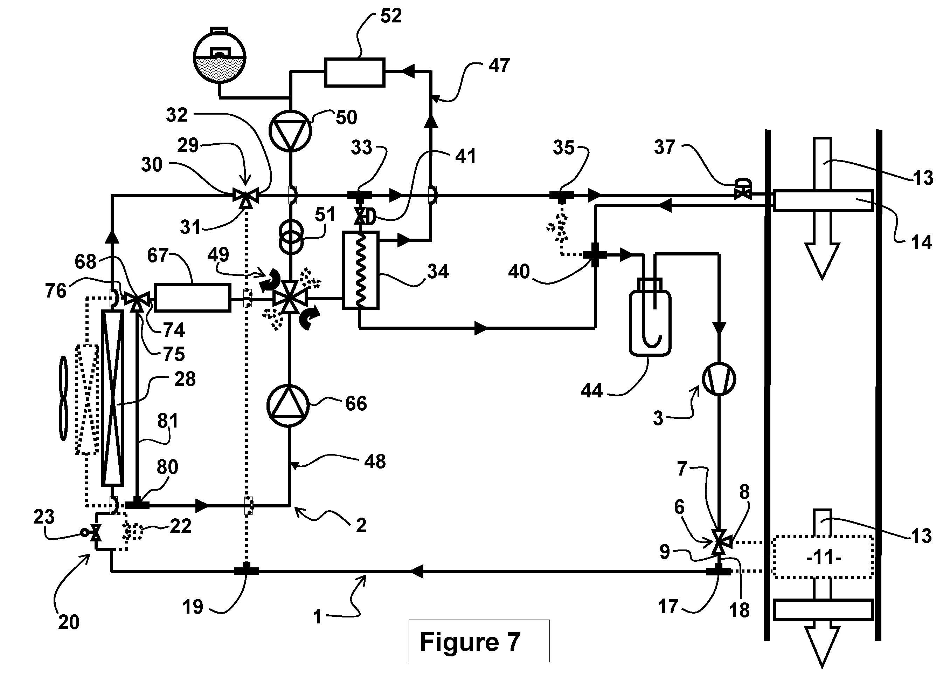

Les figures 5 à 7 présentent divers modes de réalisation de la présente invention en mode « été ». En conséquence, les figures 6 et 7 seront décrites quant aux différences par rapport à la figure 5. Les éléments précédemment décrits et fonctionnant dans les mêmes conditions ne seront pas décrits plus en détails et on se reportera à la description aux figures relatives à cet effet.

La figure 6 est une vue schématique du dispositif de conditionnement selon la présente invention en mode « été » selon un deuxième mode de réalisation. A la différence de la figure 5, le fluide réfrigérant est autorisé à circuler dans l'échangeur de chaleur fluide/fluide 34. A cet effet, le troisième organe de détente 41 est ouvert. Le fluide réfrigérant subit un abaissement de la pression au moyen du troisième organe de détente 41.

Le fluide réfrigérant se vaporise dans l'échangeur de chaleur fluide/fluide 34 en échangeant avec le fluide caloporteur. Le fluide réfrigérant, après avoir traversé l'échangeur de chaleur fluide/fluide 34, circule vers le cinquième point de raccordement 40 où il rejoint le fluide réfrigérant en provenance de l'évaporateur 14, traverse le cinquième point de raccordement 40, optionnellement l'accumulateur 44, pour retourner au compresseur 3.

A la traversée de l'échangeur de chaleur fluide/fluide 34, le fluide réfrigérant assure un refroidissement du fluide caloporteur traversant le premier échangeur de composant 51, le deuxième échangeur de composant 52 et le troisième échangeur de composant 67.

Une telle phase de fonctionnement permet d'assurer le refroidissement du flux d'air intérieur 13 envoyé dans l'habitacle.

Elle est, en particulier, utilisée pour le cas où la température extérieure est élevée afin de garantir un refroidissement adapté des composants associés, en l'occurrence, avantageusement, la batterie ou l'ensemble de batteries et/ou l'onduleur et/ou le moteur, par l'intermédiaire du premier échangeur de composant 51 et/ou du deuxième échangeur de composant 52 et/ou du troisième échangeur de composant 67.

Cette deuxième solution présente également un avantage en utilisant les calories transportées par le fluide caloporteur pour réchauffer le fluide réfrigérant de sorte à augmenter les échanges thermiques du côté basse pression et basse température. Ceci contribue à augmenter le rendement thermodynamique du circuit de fluide réfrigérant 1.

La figure 7 est une vue schématique du dispositif de conditionnement selon la présente invention en mode « été » selon un troisième mode de réalisation. La particularité de cette alternative de réalisation réside dans le fait que le fluide caloporteur circule au travers de la troisième conduite de contournement 81. En conséquence, le fluide caloporteur ne circule pas dans le radiateur 69.

A cet effet, le troisième moyen de commutation 68, en particulier la troisième vanne 'trois-voies' 68, bloque la circulation du fluide caloporteur à travers le radiateur 69, notamment entre la voie d'entrée 74 et la deuxième voie de sortie 76 tout en autorisant le passage de fluide caloporteur vers la première voie de sortie 75. Ainsi, le fluide caloporteur circule dans la troisième conduite de contournement 81 et se trouve dirigé vers la seconde pompe 66.

Cette configuration est particulièrement adapté au cas où le radiateur 69, en échangeant avec le flux d'air extérieur dont la température est élevée, tend à réchauffer de manière importante le fluide caloporteur ce qui tend à dégrader le niveau de refroidissement du fluide caloporteur en sortie de l'échangeur de chaleur fluide/fluide 34.

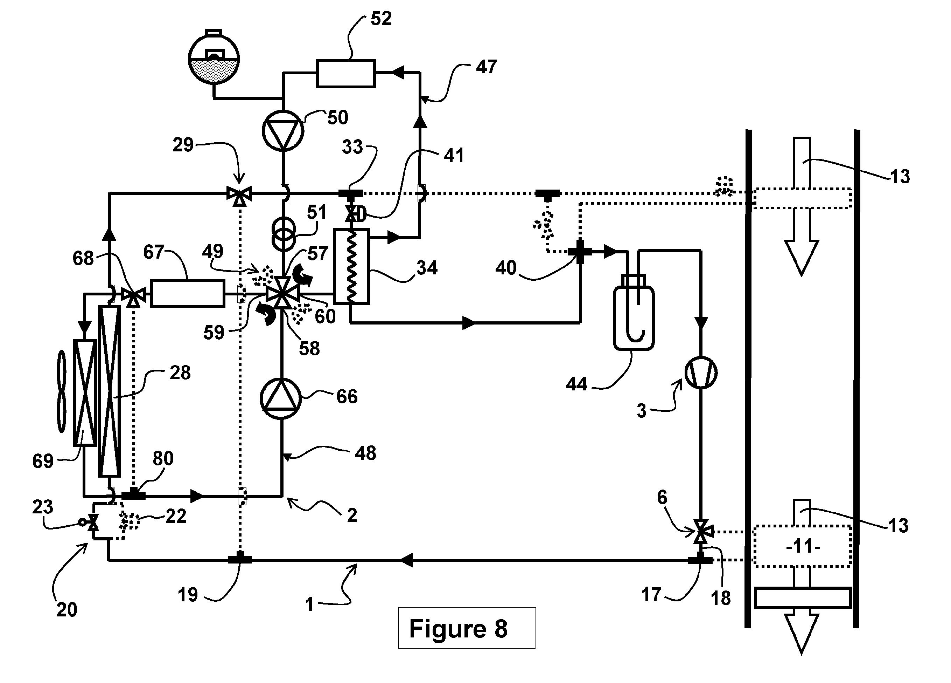

La figure 8 est une vue schématique du dispositif de conditionnement selon la présente invention le deuxième composant est susceptible de s'échauffer.

C'est notamment le cas lorsque le deuxième composant est une batterie, ou un ensemble de batteries, et que cette dernière est en phase de charge. Dans une telle situation, la batterie s'échauffe. Afin de maintenir la durée de vie et/ou optimiser le fonctionnement de la batterie, il faut assurer le refroidissement de celle-ci.

La phase de fonctionnement selon la figure 8 est proche de celle de la figure 6. Toutefois, elle présente quelques différences de configuration qui vont être décrite ci-après.

Une première différence réside au niveau du circuit de fluide caloporteur 2. Le dispositif d'interconnexion 49 est agencé pour isoler la première boucle 47 et la deuxième boucle 48. Pour ce faire, le fluide caloporteur entre dans le dispositif d'interconnexion 49 par le premier orifice d'entrée 57 et en sort par le second orifice de sortie 60 de sorte à former la première boucle 47. Dans la première boucle 47, le fluide caloporteur est mis en circulation par la première pompe 50.

De même, le fluide caloporteur entre dans le dispositif d'interconnexion 49 par le deuxième orifice d'entrée 58 et en sort par le premier orifice de sortie 59 de sorte à former la deuxième boucle 48. Dans la deuxième boucle 48, le fluide caloporteur est mis en circulation par la deuxième pompe 66.

Par ailleurs, le compresseur 3 est en fonctionnement afin de permettre la circulation du fluide réfrigérant dans le circuit de fluide réfrigérant 1. Ainsi, une détente au niveau du troisième organe de détente 41 est permise et ainsi un refroidissement du fluide caloporteur est assuré lors de la traversée de l'échangeur de chaleur fluide/fluide 34.

Une seconde différence réside dans l'agencement du circuit de fluide réfrigérant 1. Le deuxième organe de détente 37 est fermé ce qui interdit toute circulation du fluide réfrigérant au travers de l'évaporateur 14. La deuxième valve 36 est également fermée. Ainsi, l'intégralité du fluide réfrigérant circule au travers de l'échangeur de chaleur fluide/fluide 34 de sorte à apporter un refroidissement maximum au fluide caloporteur.

Cette configuration est particulièrement adapté au cas où les divers composants (onduleur, moteur, ... ) sont en fonctionnement lors de la phase de charge de la batterie ou de l'ensemble de batteries. En particulier, dans ce mode de fonctionnement, le moteur, pouvant être soumis à des échauffements importants, est correctement refroidi. A cet effet, avantageusement, le moteur est agencé dans la deuxième boucle 48.

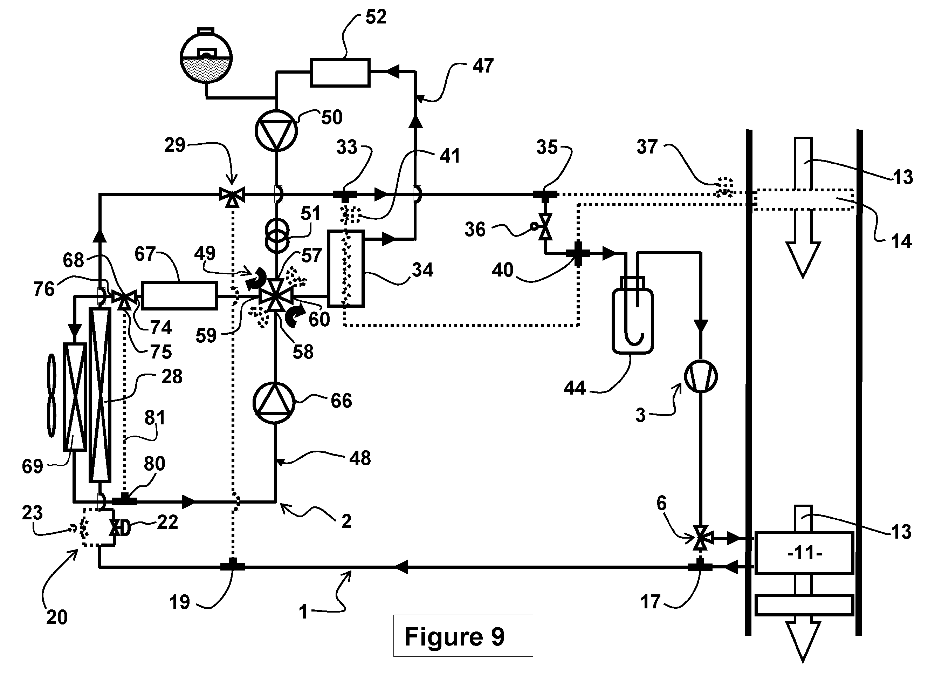

La figure 9 est une vue schématique du dispositif de conditionnement selon la présente invention en mode « hiver » selon un premier mode de réalisation. La figure 9 illustre donc le dispositif de conditionnement pendant une phase de fonctionnement dite « hiver » correspondant à un besoin en chauffage de l'habitacle du véhicule.

Dans cette configuration, le premier moyen de commutation 6, en particulier la première vanne 'trois-voies' 6, afin de permettre une circulation du fluide réfrigérant dans l'échangeur de chaleur intérieur 11. A cet effet, la première vanne 'trois-voies' 6 est agencée afin de mettre en communication la voie d'entrée 7 avec la première voie de sortie 8. Ainsi, le fluide réfrigérant circule du compresseur 3 à travers l'échangeur de chaleur intérieur 11 en échangeant de la chaleur avec le flux d'air intérieur 13. Le fluide réfrigérant ne passe donc pas dans le passage de contournement 18.

Le fluide réfrigérant sort de l'échangeur de chaleur intérieur 11 et est dirigé vers le premier point de raccordement 17 en direction de l'organe de régulation 20. Contrairement aux phases de fonctionnement précédemment décrites, le premier organe de détente 22 est ouvert alors que la première valve de contrôle 23 est fermée, autorisant le passage du fluide réfrigérant avec un abaissement de pression. Le fluide réfrigérant traverse ensuite l'échangeur de chaleur extérieur 28, qui se comporte alors comme un évaporateur, dans lequel le fluide réfrigérant échange le flux d'air extérieur.

Par suite, le fluide réfrigérant traverse, successivement, le deuxième moyen de commutation 29, en particulier la deuxième vanne trois voies 29, le troisième point de raccordement 33 et le quatrième point de raccordement 35.

La configuration du deuxième moyen de commutation 29 est telle que la circulation dans le canal de contournement 31 est ainsi bloquée. Le fluide réfrigérant traverse le troisième point de raccordement 33.

Le troisième organe de détente 41 est fermé de sorte à empêcher toute circulation de fluide réfrigérant dans l'échangeur de chaleur fluide/fluide 34.

Selon la présente configuration, la deuxième vanne de contrôle 36 est ouverte ce autorisant une circulation du fluide réfrigérant du quatrième point de raccordement 35 directement vers le cinquième point de raccordement 40. En parallèle, le deuxième organe de détente 37 est fermé interdisant toute circulation de fluide réfrigérant dans l'évaporateur 14.

Entre l'orifice de sortie 5 du compresseur 3 et le premier organe de détente 22, le fluide réfrigérant est à haute pression et haute température. Entre le premier organe de détente 22 et l'orifice d'entrée 4 du compresseur 3, le fluide réfrigérant est soumis à basse pression et basse température.

Comme le fluide réfrigérant qui traverse l'échangeur de chaleur intérieur 11 est à haute température, il échange avec le flux d'air intérieur 13 ce qui fournit le chauffage attendu pendant cette phase de fonctionnement.

Le fluide réfrigérant sort du cinquième point de raccordement 40, optionnellement à travers l'accumulateur 44, pour retourner au compresseur 3.

Les autres composants du circuit non cités dans la description ci-dessus ne sont pas traversés par le fluide réfrigérant pendant cette phase de fonctionnement correspondant à un besoin en chauffage du flux d'air intérieur 13 selon un premier mode de réalisation.

D'autre part, le fluide caloporteur est mis en mouvement par la première pompe 50 et/ou par la seconde pompe 66. Il traverse le dispositif d'interconnexion 49 en passant du premier orifice d'entrée 57 vers le premier orifice de sortie 59 puis traverse le troisième échangeur de composant 67, le troisième moyen de commutation 68, en particulier la troisième vanne 'trois-voies' 68 en passant de la voie d'entrée 74 vers la seconde voie de sortie 76.

Le fluide caloporteur traverse alors le radiateur 69, où il cède des calories au flux d'air extérieur. Par suite, le fluide caloporteur passe par le sixième point de raccordement 80, la seconde pompe 66 pour entrer dans le dispositif d'interconnexion 49 par le deuxième orifice d'entrée 58.

Le fluide caloporteur sort par le second orifice de sortie 60 pour entrer dans l'échangeur de chaleur fluide/fluide 34. Dans cette phase de fonctionnement, le fluide caloporteur ne subit pas d'échange thermique puisque le fluide réfrigérant ne circule pas au travers de l'échangeur de chaleur fluide/fluide 34.

Enfin, Le fluide caloporteur traverse le deuxième échangeur de composant 52, puis la première pompe 50 et le premier échangeur de composant 51.

En traversant le premier échangeur de composant 51, le deuxième échangeur de composant 52 et le troisième échangeur de composant 67, le fluide caloporteur conditionne, en particulier refroidit, les composants associés, en l'occurrence avantageusement la batterie ou l'ensemble de batteries et/ou l'onduleur et/ou le moteur. Ainsi, le fluide caloporteur se réchauffe.

On constate qu'au cours de cette phase de fonctionnement correspondant à un chauffage du flux d'air intérieur 13, la première boucle 47 et la deuxième boucle 48 sont connectées fluidiquement par le dispositif d'interconnexion 49. Le fluide caloporteur puise ainsi les calories au niveau du premier échangeur de composant 51 et/ou du deuxième échangeur de composant 52 et/ou du troisième échangeur de composant 67. Les calories sont dissipées dans le flux d'air extérieur au moyen du radiateur 69.

En conditions climatiques hivernales, à basses températures, le rendement de la batterie, ou de l'ensemble des batteries, est dégradé et inférieur au rendement idéal susceptible d'être fourni. De plus, l'autonomie du véhicule est fortement impactée par la puissance requise dans les premiers instants de roulage alors que la batterie, ou de l'ensemble des batteries, est encore à une température basse. Dans de telles circonstances, la dissipation thermique de la batterie est importante mais insuffisante pour atteindre la température optimale de fonctionnement dans un temps compatible avec un roulage urbain moyen.

Selon la configuration selon la figure 9, la première boucle 47 et la deuxième boucle 48 du circuit de fluide caloporteur 2 sont en série. Ainsi, on définit une mutualisation des calories dissipées par les divers composants de la chaine de traction, notamment le moteur et l'onduleur. Ceci permet de chauffer la batterie, ou de l'ensemble des batteries, en roulage afin d'évoluer vers des points de rendement plus intéressants en un temps réduit.

Lors que la température optimale de fonctionnement est atteinte, il est nécessaire d'évacuer les calories dissipées par les composants disposés dans le circuit de fluide caloporteur 2, en l'occurrence la batterie ou l'ensemble de batteries et/ou l'onduleur et/ou le moteur, vers l'extérieur par l'intermédiaire du radiateur 69.

La régulation en température se fait par la régulation du troisième moyen de commutation 68, en particulier de la troisième vanne 'trois-voies' 68, permettant la circulation du fluide caloporteur dans le radiateur 69 et/ou dans la troisième conduite de contournement 81, notamment selon le degré d'ouverture de la première voie de sortie 75 et de la deuxième voie de sortie 76.

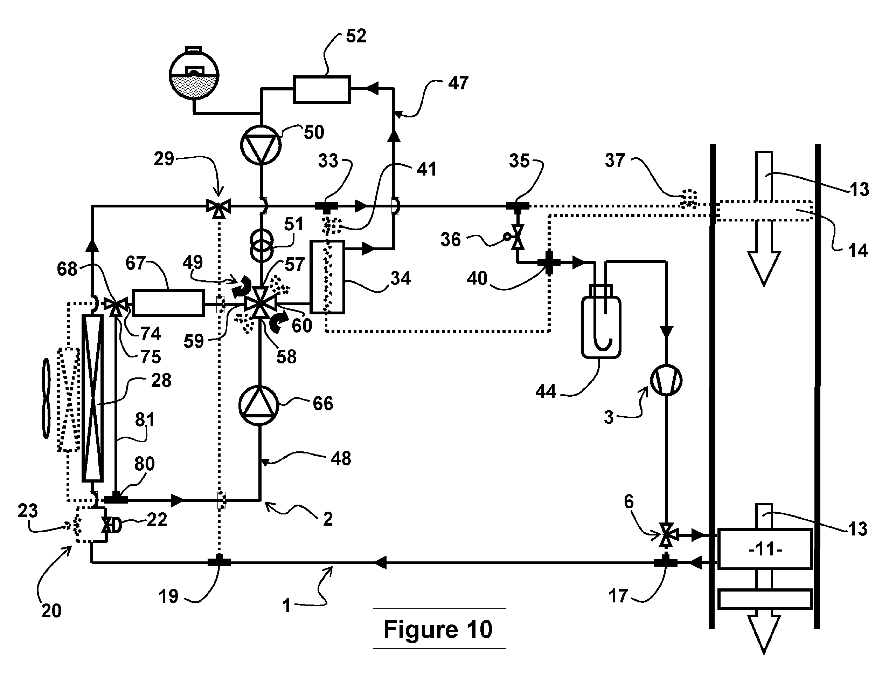

Les figures 9 à 12 présentent selon la présente invention en mode « hiver » selon divers modes de réalisation. En conséquence, les figures 10 à 12 seront décrites quant aux différences par rapport à la figure 9. Les éléments précédemment décrits et fonctionnant dans les mêmes conditions ne seront pas décrits plus en détails et on se reportera à la description aux figures relatives à cet effet.

La figure 10 est une vue schématique du dispositif de conditionnement selon la présente invention en mode « hiver » selon un deuxième mode de réalisation. A la différence de la figure 9, le troisième moyen de commutation 68, en particulier la troisième vanne 'trois-voies' 68, assure une circulation du fluide caloporteur au travers de la conduite de contournement 81, en particulier entre la voie d'entrée 74 et la première voie de sortie 75. Ainsi, le fluide caloporteur ne circule pas dans le radiateur 69.

Une telle configuration permet, comme détaillée précédemment, de réchauffer la batterie ou l'ensemble de batterie, lors de phases initiales de roulage. De plus, elle présente l'avantage, lorsque le flux d'air extérieur est à une température très froide, d'éviter de refroidir de manière trop importante le fluide caloporteur ce qui serait nuisible au maintien à une température constante de la batterie ou l'ensemble de batteries et/ou l'onduleur et/ou le moteur, lorsque la température optimale de fonctionnement est atteinte.

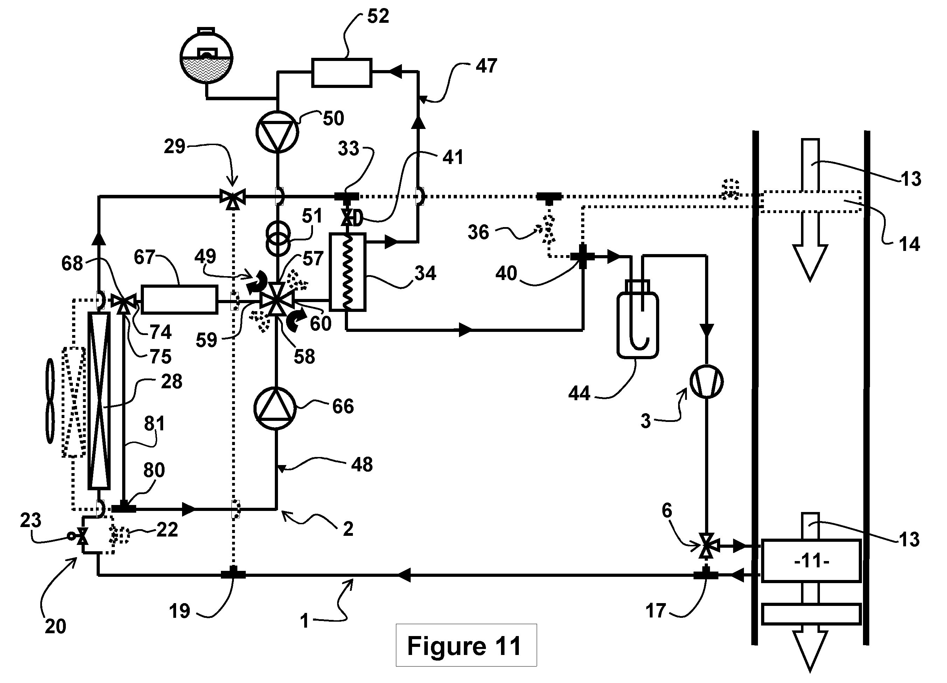

La figure 11 est une vue schématique du dispositif de conditionnement selon la présente invention en mode « hiver » selon un troisième mode de réalisation. A la différence de la figure 10, le premier organe de détente 22 est fermé alors que la première vanne de contrôle 23 est passante, autorisant le passage du fluide réfrigérant sans abaissement de pression. Le fluide réfrigérant traverse l'échangeur de chaleur extérieur 28, qui se comporte alors comme un condenseur, dans lequel le fluide réfrigérant échange avec le flux d'air extérieur.

Par suite, le fluide réfrigérant traverse, successivement, le deuxième moyen de commutation 29, en particulier la deuxième vanne 'trois-voies' 29, et le troisième point de raccordement 33.

Dans la configuration de la figure 11, le troisième organe de détente 41 est ouvert assurant un abaissement de pression et permettant une circulation de fluide réfrigérant dans l'échangeur de chaleur fluide/fluide 34.

Le fluide réfrigérant se vaporise dans l'échangeur de chaleur fluide/fluide 34 en échangeant avec le fluide caloporteur. Le fluide réfrigérant, après avoir traversé l'échangeur de chaleur fluide/fluide 34, circule vers le cinquième point de raccordement 40 pour retourner au compresseur 3, en traversant optionnellement l'accumulateur 44.

La deuxième vanne de contrôle 36 est fermée pour interdire toute circulation du fluide réfrigérant du quatrième point de raccordement 35 vers le cinquième point de raccordement 40.

L'intégralité du fluide réfrigérant circule à travers l'échangeur de chaleur fluide/fluide 34 de sorte à apporter un refroidissement maximum au fluide caloporteur.

Une telle configuration permet d'utiliser le circuit de fluide caloporteur 2, en mutualisant toutes les déperditions thermiques des divers composants liés à la chaîne de traction, tels que les batteries pour stocker l'énergie électrique, le moteur pour assurer la propulsion du véhicule et l'onduleur pour adapter le signal électrique au moteur, comme source de chaleur en lieu et place de prélever de la chaleur sur le flux d'air extérieur. On passe donc d'un dispositif de conditionnement thermique utilisant un échange de chaleur air/air, c'est-à-dire condensation sur l'air et évaporation sur l'air, à un dispositif de conditionnement thermique utilisant un échange de chaleur air/fluide, c'est-à-dire condensation sur l'air et évaporation sur le fluide caloporteur.

Ainsi, le chauffage de l'habitacle par l'échangeur de chaleur intérieur 11 se fait donc sur un meilleur point de rendement. En effet, dans cette configuration, la température du fluide caloporteur est supérieure à celui du flux d'air extérieur. Une telle configuration peut, notamment, être agencée après un roulage préalable.

La régulation en température des divers composants liés à la chaîne de traction se fait par l'échangeur de chaleur fluide/fluide 34, en lieu et place du radiateur 69.

Enfin, le chauffage du flux d'air intérieur 13 par voie thermodynamique, c'est-à-dire par l'intermédiaire de l'échangeur de chaleur intérieur 11, présente l'avantage de fonctionner à un coefficient de performance nettement supérieur à 1. Une telle configuration apporte une solution de chauffage indépendante du roulage donc relativement stable. Pour une puissance de chauffage de l'habitacle déterminée, le chauffage du flux d'air intérieur 13 par voie thermodynamique est la solution permettant un maintien de l'autonomie d'un véhicule malgré la consommation du compresseur 3 puisée sur la batterie.

De plus, une telle phase de fonctionnement permet d'assurer le chauffage du flux d'air intérieur 13 envoyé dans l'habitacle et d'assurer un échange thermique dans l'échangeur de chaleur fluide/fluide 34. Ainsi, le fluide réfrigérant tend à refroidir le fluide caloporteur permettant ainsi un refroidissement des composants de la chaîne de traction par le biais du premier échangeur de composant 51 et/ou du deuxième échangeur de composant 52 et/ou du troisième échangeur de composant 67.

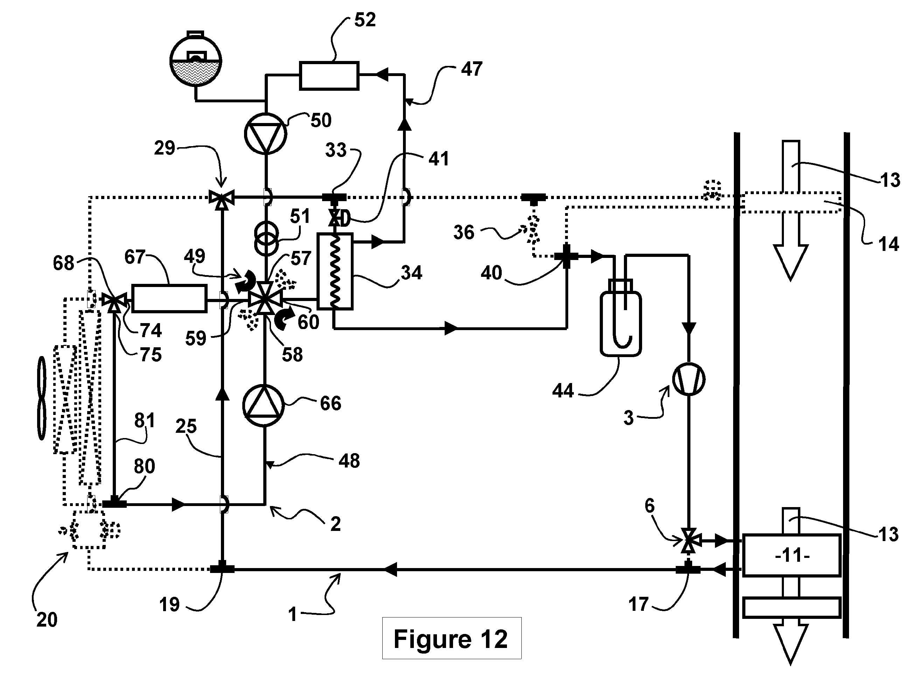

La figure 12 est une vue schématique du dispositif de conditionnement selon la présente invention en mode « hiver » selon un quatrième mode de réalisation. A la différence de la figure 11, le fluide réfrigérant ne traverse pas l'organe de régulation 20 et l'échangeur de chaleur extérieur 28. Le fluide réfrigérant circule alors dans la deuxième conduite de contournement 25. A cet effet, le deuxième moyen de commutation 29, en particulier la deuxième vanne 'trois-voies' 29, est configurée de sorte à bloquer le passage de fluide réfrigérant par la première voie d'entrée 30.

Une telle configuration permet d'avoir un circuit de fluide réfrigérant 1 avec un unique étage de condensation réalisé dans l'échangeur de chaleur intérieur 11. Ceci permet d'optimiser l'emploi de l'énergie du fluide réfrigérant pour le chauffage de l'habitacle, lorsque cela est nécessaire, c'est-à-dire lorsque la température de l'habitacle doit être rapidement augmentée. Il n'existe pas de perdition de chaleur par un deuxième étage de condensation réalisé dans l'échangeur de chaleur extérieur 28.

Lorsque l'optimisation de l'emploi de l'énergie du fluide réfrigérant est réalisée, il est alors possible de procéder à une phase finale de condensation dans l'échangeur de chaleur extérieur 28, selon une configuration telle que présentée à la figure 11.

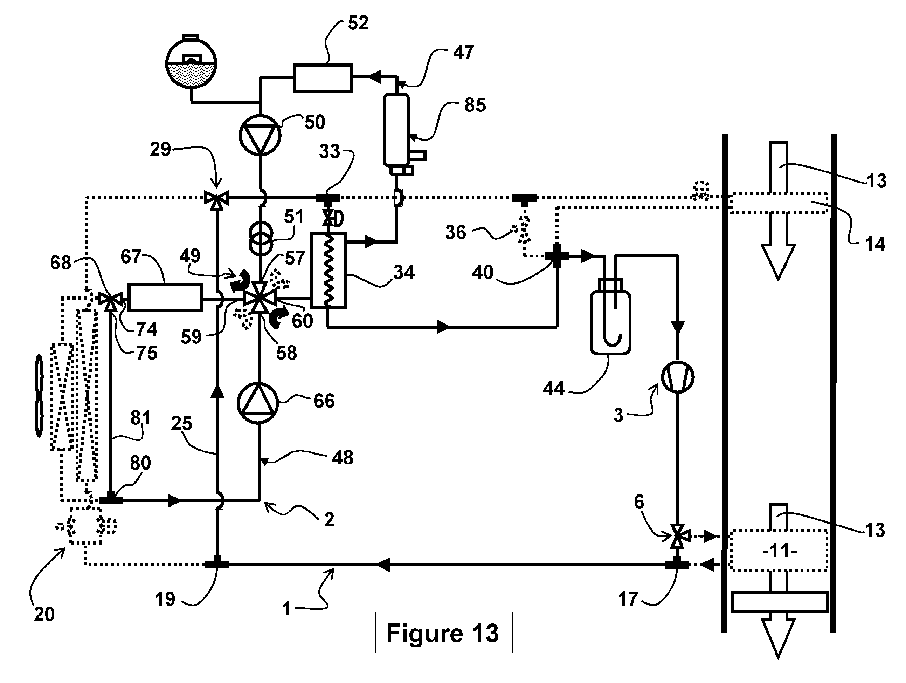

La figure 13 est une vue schématique d'une alternative du dispositif de conditionnement selon la présente invention. La figure 13 illustre une amélioration du dispositif de conditionnement selon l'invention pour le mode « hiver » tel que décrit en relation avec les figures 9 à 12. La représentation du dispositif de conditionnement étant identique à celle illustrée sur la figure 12, les éléments précédemment décrits et fonctionnant dans les mêmes conditions ne seront pas décrits plus en détails et on se reportera à la description aux figures relatives à cet effet.

Dans les conditions climatiques très froides ou lorsque le stationnement du véhicule est prolongé par temps froid, il est nécessaire de maintenir un niveau de température pour, d'une part, la batterie ou l'ensemble de batteries et, d'autre part, l'onduleur et le moteur.

Dans ce but, un dispositif de chauffage électrique 85 est agencé dans le circuit de fluide caloporteur 2. Selon une première variante, le dispositif de chauffage électrique 85 est agencé en série dans le circuit de fluide caloporteur 2. Alternativement, le dispositif de chauffage électrique 85 est agencé en parallèle avec une partie du circuit de fluide caloporteur 2.

Le dispositif de chauffage électrique 85 permet d'assurer un chauffage complémentaire du fluide caloporteur. Préférentiellement, le dispositif de chauffage électrique 85 est installé dans la première boucle 47, par exemple entre l'échangeur de chaleur fluide/fluide 34 et le deuxième échangeur de composant 52.

Un tel positionnement du dispositif de chauffage électrique 85 présente l'avantage d'assurer un chauffage du fluide caloporteur directement en amont de la batterie ou de l'ensemble de batterie. Ainsi, par l'intermédiaire du deuxième échangeur de composant 52, la batterie ou de l'ensemble de batterie bénéficie pleinement des calories produites sans subir de déperditions thermiques, engendrées par exemple par des conduits et/ou des masses métalliques.

A titre d'exemple, le dispositif de chauffage électrique 85 est un thermoplongeur 85 baignant dans le fluide caloporteur. Le thermoplongeur 85 est agencé pour fonctionner selon une tension d'alimentation de 220 V. Le thermoplongeur 85 est avantageusement auto-contrôlé, en ce sens qu'il comprend un thermostat détectant la température du fluide caloporteur pour autoriser ou interdire une mise en oeuvre du thermoplongeur 85.

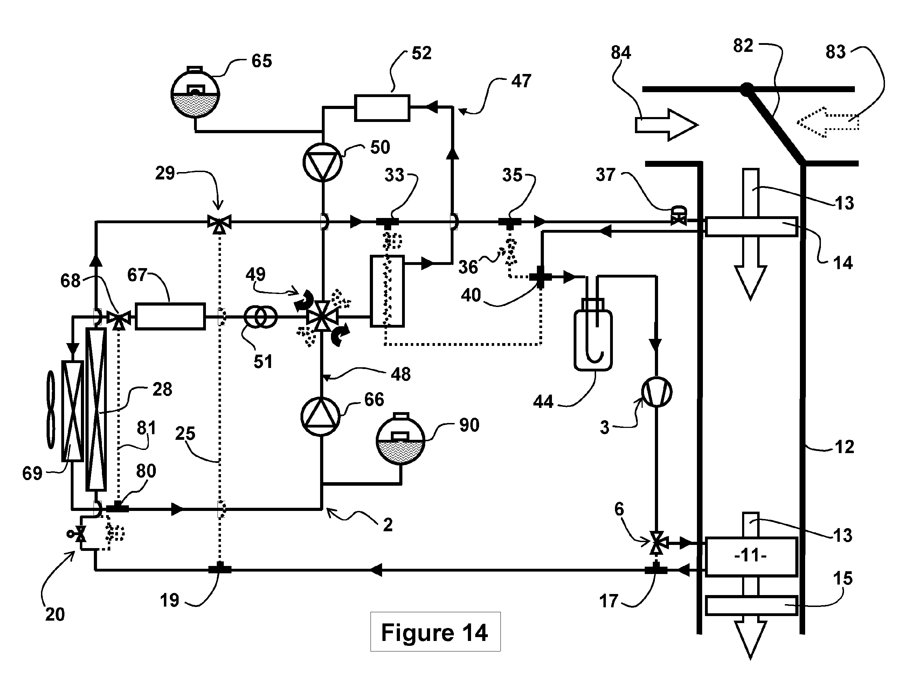

La figure 14 est une vue schématique d'une variante de réalisation du dispositif de conditionnement selon la présente invention. Selon cette alternative, le premier composant, ou onduleur, est agencé dans la deuxième boucle 48 du circuit de fluide caloporteur 2. Il est ainsi possible d'assurer le refroidissement des composants de la chaîne de traction susceptibles de s'échauffer, c'est-à-dire le premier composant, ou onduleur, et le troisième composant, ou moteur, dans une même partie du circuit de fluide caloporteur 2, ici la deuxième boucle 48.

De plus, une telle réalisation présente également l'avantage de réduire les dimensions de l'échangeur de chaleur fluide/fluide 34 car la puissance de refroidissement requise est réduite.

De même de façon complémentaire ou alternative, un deuxième vase d'expansion 90 est raccordé à la deuxième boucle 48 du circuit de fluide caloporteur 2. Le deuxième vase d'expansion 90 forme une réserve de fluide caloporteur pour le circuit de fluide caloporteur 2. Ainsi, lorsque la première boucle 47 et la deuxième boucle 48 du circuit de fluide caloporteur 2 opèrent de manière indépendante, chacune des boucles disposent d'une réserve de fluide caloporteur dédiée. De façon optionnelle, il est envisageable de mutualiser le premier vase d'expansion 65 et le deuxième vase d'expansion 90 en une seule réserve raccordée à la première boucle 47 et à la deuxième boucle 48, respectivement en amont de la première pompe 50 et en amont de la deuxième pompe

Ainsi, le premier vase d'expansion 65 et le deuxième vase d'expansion 90 forment une réserve de fluide caloporteur et empêchent une montée importante de la pression du fluide caloporteur dans la première boucle 47 et à la deuxième boucle 48 qui serait susceptible d'endommager le circuit de fluide caloporteur 2.

Bien évidemment, dans l'ensemble des exemples de réalisation présentés sur les figures 1 à 14, le dispositif d'interconnexion 49 est toujours à même d'être configuré pour isoler ou mutualiser la première boucle 47 et la deuxième boucle 48 du circuit de fluide caloporteur 2.

Le dispositif d'interconnexion 49 permet donc de découpler le refroidissement du premier composant, ou onduleur, et du deuxième composant, ou batterie ou ensemble de batteries, par l'intermédiaire de l'échangeur de chaleur fluide/fluide 34. En effet, dans le cas de températures d'air extérieures très élevées, le radiateur 69 ne permet d'apporter un complément de refroidissement au fluide caloporteur.

Au contraire, l'échange de chaleur réalisé dans le radiateur 69 est susceptible de réchauffer le fluide caloporteur, qui est par ailleurs refroidi par l'échangeur de chaleur fluide/fluide 34. En découplant la première boucle 47 et la deuxième boucle 48 du circuit de fluide caloporteur 2, la température du fluide caloporteur dans la première boucle 47 est plus froide.

Ceci améliore le refroidissement du premier composant, ou onduleur, et du deuxième composant, ou batterie ou ensemble de batteries. Par contre, la température du fluide caloporteur dans la deuxième boucle 48 est plus élevée. Ceci est moins préoccupant puisque le troisième composant, ou moteur, est moins sensible à la température.

En cas de températures trop élevée le dispositif d'interconnexion 49 est commuté afin de mutualiser la première boucle 47 et la deuxième boucle 48 du circuit de fluide caloporteur 2.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention, telle que définie par les revendications.

## Revendications

1. Dispositif de conditionnement thermique comprenant un boucle de conditionnement comportant un circuit de fluide réfrigérant (1) et un circuit de fluide caloporteur (2),
- le circuit de fluide réfrigérant (1) comprenant au moins un compresseur (3), un échangeur de chaleur intérieur (11), un échangeur de chaleur extérieur (28) et un évaporateur (14)
- le circuit de fluide caloporteur (2) comprenant au moins un premier échangeur de composant (51) et/ou un deuxième échangeur de composant (52), un troisième échangeur de composant (67) et un radiateur (69),
un échangeur de chaleur fluide/fluide (34) installé dans le circuit de fluide réfrigérant (1) et dans le circuit de fluide caloporteur (2),
ledit circuit de fluide caloporteur (2) comprenant une première boucle (47) et une deuxième boucle (48) interconnectées par un dispositif d'interconnexion (49), la première boucle (47) comprenant d'une part l'échangeur de chaleur fluide/fluide (34) et d'autre part le premier échangeur de composant (51) et/ou le deuxième échangeur de composant (52), et la deuxième boucle (48) comprenant d'une part le radiateur (69) et d'autre part le premier échangeur de composant (51) et/ou le troisième échangeur de composant (67), ledit premier échangeur de composant (51) étant soit intégré à la première boucle (47), soit à la deuxième boucle (48).

2. Dispositif de conditionnement thermique selon la revendication 1, dans laquelle la première boucle (47) comprend une première pompe (50) de circulation du fluide caloporteur.

3. Dispositif de conditionnement thermique selon la revendication 1 ou 2, dans laquelle la deuxième boucle (48) comprend une seconde pompe (66) de circulation du fluide caloporteur.

4. Dispositif de conditionnement thermique selon l'une quelconque des revendications 1 à 3, dans laquelle la deuxième boucle (48) comprend une 41 conduite de contournement (81), dite troisième conduite de contournement (81), du radiateur (69).

5. Dispositif de conditionnement thermique selon l'une quelconque des revendications précédentes, dans laquelle l'échangeur de chaleur fluide/fluide (34) est installé en parallèle de l'évaporateur (14).

6. Dispositif de conditionnement thermique selon l'une quelconque des revendications précédentes, dans laquelle le circuit de fluide réfrigérant (1) comporte un point de raccordement (40), dit cinquième point de raccordement (40), de l'évaporateur (14) et de l'échangeur de chaleur fluide/fluide (34).

7. Dispositif de conditionnement thermique selon l'une quelconque des revendications précédentes, dans lequel le circuit de fluide réfrigérant (1) comporte une conduite de contournement (18), dite première conduite de contournement (18), de l'échangeur de chaleur intérieur (11).

8. Dispositif de conditionnement thermique selon l'une quelconque des revendications précédentes, dans laquelle le circuit de fluide réfrigérant (1) comporte une conduite de contournement (25), dite deuxième conduite de contournement (25), de l'échangeur de chaleur extérieur (28).

9. Dispositif de conditionnement thermique selon l'une quelconque des revendications précédentes, dans lequel un flux d'air intérieur (13) est canalisé par un boîtier (12) dans lequel sont disposés l'évaporateur (14) et l'échangeur de chaleur intérieur (11) afin d'être traversés par le flux d'air intérieur (13) préalable à une distribution dans un habitacle d'un véhicule.

10. Dispositif de conditionnement thermique selon la revendication 7 ou 8, dans lequel le fluide réfrigérant circule, dans le circuit de fluide réfrigérant (1), successivement, dans le compresseur (3), la première conduite de contournement (18), l'échangeur de chaleur extérieur (28) et/ou la deuxième conduite de 42 contournement (25), l'évaporateur (14) et/ou l'échangeur de chaleur fluide/fluide (34) et le compresseur (3).

11. Dispositif de conditionnement thermique selon la revendication 7 ou 8, dans lequel le fluide réfrigérant circule dans le circuit de fluide réfrigérant (1), successivement, dans le compresseur (3), l'échangeur de chaleur intérieur (11), l'échangeur de chaleur extérieur (28) et/ou la deuxième conduite de contournement (25), l'évaporateur (14) et/ou l'échangeur de chaleur fluide/fluide (34) et le compresseur (3).

12. Dispositif de conditionnement thermique selon la revendication 7 ou 8, dans lequel le fluide réfrigérant circule dans le circuit de fluide réfrigérant (1), successivement, dans le compresseur (3), l'échangeur de chaleur intérieur (11) et/ou la première conduite de contournement (18), l'échangeur de chaleur extérieur (28) et/ou la deuxième conduite de contournement (25) et le compresseur (3).

13. Dispositif de conditionnement thermique selon l'une quelconque des revendications 1 à 12, dans lequel le fluide caloporteur circule, dans le circuit de fluide caloporteur (2), successivement, dans le premier échangeur de composant (51), le dispositif d'interconnexion (49), l'échangeur de chaleur fluide/fluide (34), le deuxième échangeur de composant (52) et le premier échangeur de composant (51).

14. Dispositif de conditionnement thermique selon l'une quelconque des revendications 1 à 12, dans lequel le fluide caloporteur circule, dans le circuit de fluide caloporteur (2), successivement, dans le deuxième échangeur de composant (52), le dispositif d'interconnexion (49), l'échangeur de chaleur fluide/fluide (34) et le deuxième échangeur de composant (52).

15. Dispositif de conditionnement thermique selon la revendication 4, dans lequel le fluide caloporteur circule dans le circuit de fluide caloporteur (2), 43 successivement, dans le premier échangeur de composant (51), le dispositif d'interconnexion (49), le troisième échangeur de composant (67), le radiateur (69) et/ou la troisième conduite de contournement (81), le dispositif d'interconnexion (49), l'échangeur de chaleur fluide/fluide (34), le deuxième échangeur de composant (52) et le premier échangeur de composant (51).

16. Dispositif de conditionnement thermique selon la revendication 4, dans lequel le fluide caloporteur circule dans le circuit de fluide caloporteur (2), successivement, dans le dispositif d'interconnexion (49), le premier échangeur de composant (51), le troisième échangeur de composant (67), le radiateur (69) et/ou la troisième conduite de contournement (81), le dispositif d'interconnexion (49), l'échangeur de chaleur fluide/fluide (34), le deuxième échangeur de composant (52) et le dispositif d'interconnexion (49).

## Patentansprüche

1. Vorrichtung zur Wärmekonditionierung, die eine Konditionierungsschleife aufweist, die einen Kältemittelkreislauf (1) und einen Wärmeträgerkreislauf (2) aufweist,
wobei der Kältemittelkreislauf (1) mindestens einen Verdichter (3), einen internen Wärmeaustauscher (11), einen externen Wärmeaustauscher (28) und einen Verdampfer (14) aufweist,
wobei der Wärmeträgerkreislauf (2) mindestens einen ersten Komponentenwärmeaustauscher (51) und/oder einen zweiten Komponentenwärmeaustauscher (52), einen dritten Komponentenwärmeaustauscher (67) und einen Kühler (69) aufweist,
einen Flüssigkeits-/Flüssigkeits-Wärmeaustauscher (34), der in dem Kältemittelkreislauf (1) und in dem Wärmeträgerkreislauf (2) installiert ist,
wobei der Wärmeträgerkreislauf (2) eine erste Schleife (47) und eine zweite Schleife (48), die miteinander durch eine Verbindungsvorrichtung (49) verbunden sind, aufweist, wobei die erste Schleife (47) einerseits den Flüssigkeits-/Flüssigkeits-Wärmeaustauscher (34) aufweist und andererseits den ersten Komponentenwärmeaustauscher (51) und/oder den zweiten Komponentenwärmeaustauscher (52) aufweist, und die zweite Schleife (48) einerseits den Kühler (69) und andererseits den ersten Komponentenwärmeaustauscher (51) und/oder den dritten Komponentenwärmeaustauscher (67) aufweist, wobei der erste Komponentenwärmeaustauscher (51) entweder in die erste Schleife (47) oder in die zweite Schleife (48) integriert ist.

2. Wärmekonditionierungsvorrichtung nach Anspruch 1, bei der die erste Schleife (47) eine erste Umwälzpumpe (50) des Wärmeträgers aufweist.

3. Wärmekonditionierungsvorrichtung nach Anspruch 1 oder 2, bei der die zweite Schleife (48) eine zweite Umwälzpumpe (66) des Wärmeträgers aufweist.

4. Wärmekonditionierungsvorrichtung nach einem der Ansprüche 1 bis 3, bei der die zweite Schleife (48) eine Umgehungsleitung (81), dritte Umgehungsleitung (81) des Kühlers (69) genannt, aufweist.

5. Wärmekonditionierungsvorrichtung nach einem der vorhergehenden Ansprüche, bei der der Flüssigkeits-/Flüssigkeits-Wärmeaustauscher (34) parallel zu dem Verdampfer (14) installiert ist.

6. Wärmekonditionierungsvorrichtung nach einem der vorhergehenden Ansprüche, bei der der Kältemittelkreislauf (1) eine Anschlussstelle (40), fünfte Anschlussstelle (40) genannt, des Verdampfers (14) und des Flüssigkeits-/Flüssigkeits-Wärmeaustauschers (34) aufweist.

7. Wärmekonditionierungsvorrichtung nach einem der vorhergehenden Ansprüche, bei der der Kältemittelkreislauf (1) eine Umgehungsleitung (18), erste Umgehungsleitung (18) des internen Wärmeaustauschers (11) aufweist.

8. Wärmekonditionierungsvorrichtung nach einem der vorhergehenden Ansprüche, bei der der Kältemittelkreislauf (1) eine Umgehungsleitung (25), zweite Umgehungsleitung (25) des externen Wärmeaustauschers (28) genannt, aufweist.

9. Wärmekonditionierungsvorrichtung nach einem der vorhergehenden Ansprüche, bei der ein innerer Luftstrom (13) von einem Gehäuse (12), in dem der Verdampfer (14) und der interne Wärmeaustauscher (11) angeordnet sind, kanalisiert wird, um von dem inneren Luftstrom (13) vor einer Verteilung in einem Insassenraum des Fahrzeugs durchquert zu werden.

10. Wärmekonditionierungsvorrichtung nach Anspruch 7 oder 8, bei der das Kältemittel in dem Kältemittelkreislauf (1) nacheinander in dem Verdichter (3), der ersten Umgehungsleitung (18), dem externen Wärmeaustauscher (28) und/oder der zweiten Umgehungsleitung (25), dem Verdampfer (14) und/oder dem Flüssigkeits-/Flüssigkeits-Wärmeaustauscher (34) und dem Verdichter (3) zirkuliert.

11. Wärmekonditionierungsvorrichtung nach Anspruch 7 oder 8, bei der das Kältemittel in dem Kältemittelkreislauf (1) nacheinander in dem Verdichter (3), dem internen Wärmeaustauscher (11), dem externen Wärmeaustauscher (28) und/oder der zweiten Umgehungsleitung (25), dem Verdampfer (14) und/oder dem Wärmeaustauscher (34) und dem Verdichter (3) zirkuliert.

12. Wärmekonditionierungsvorrichtung nach Anspruch 7 oder 8, bei der das Kältemittel in dem Kältemittelkreislauf (1) nacheinander in dem Verdichter (3), dem internen Wärmeaustauscher (11) und/oder der ersten Umgehungsleitung (18), dem externen Wärmeaustauscher (28) und/oder der zweiten Umgehungsleitung (25) und dem Verdichter (3) zirkuliert.

13. Wärmekonditionierungsvorrichtung nach einem der Ansprüche 1 bis 12, bei der der Wärmeträger in dem Wärmeträgerkreislauf (2) nacheinander in einem ersten Komponentenwärmeaustauscher (51), der Verbindungsvorrichtung (49), dem Flüssigkeits-/Flüssigkeits-Wärmeaustauscher (34), dem zweiten Komponentenwärmeaustauscher (52) und dem ersten Komponentenwärmeaustauscher (51) zirkuliert.

14. Wärmekonditionierungsvorrichtung nach einem der Ansprüche 1 bis 12, bei der der Wärmeträger in dem Wärmeträgerkreislauf (2) nacheinander in dem zweiten Komponentenwärmeaustauscher (52), der Verbindungsvorrichtung (49), dem Flüssigkeits-/Flüssigkeits-Wärmeaustauscher (34) und dem zweiten Komponentenwärmeaustauscher (52) zirkuliert.

15. Wärmekonditionierungsvorrichtung nach Anspruch 4, bei der der Wärmeträger in dem Wärmeträgerkreislauf (2) nacheinander in dem ersten Komponentenwärmeaustauscher (51), der Verbindungsvorrichtung (49), dem dritten Komponentenwärmeaustauscher (67), dem Kühler (69) und/oder der dritten Umgehungsleitung (81), der Verbindungsvorrichtung (49), dem Flüssigkeits-/Flüssigkeits-Wärmeaustauscher (34), dem zweiten Komponentenwärmeaustauscher (52) und dem ersten Komponentenwärmeaustauscher (51) zirkuliert.

16. Wärmekonditionierungsvorrichtung nach Anspruch 4, bei der der Wärmeträger in dem Wärmeträgerkreislauf (2) nacheinander in der Verbindungsvorrichtung (49), dem ersten Komponentenwärmeaustauscher (51), dem dritten Komponentenwärmeaustauscher (67), dem Kühler (69) und/oder der dritten Umgehungsleitung (81), der Verbindungsvorrichtung (49), dem Flüssigkeits-/Flüssigkeits-Wärmeaustauscher (34), dem zweiten Komponentenwärmeaustauscher (52) und der Verbindungsvorrichtung (49) zirkuliert.

## Claims

1. Thermal conditioning device comprising a conditioning loop which has a refrigerant circuit (1) and a coolant circuit (2),
- the refrigerant circuit (1) having at least a compressor (3), an internal heat exchanger (11), an external heat exchanger (28) and an evaporator (14),
- the coolant circuit (2) comprising at least a first component exchanger (51) and/or a second component exchanger (52), a third component exchanger (67) and a radiator (69),
a fluid/fluid heat exchanger (34) installed in the refrigerant circuit (1) and in the coolant circuit (2), said coolant circuit (2) having a first loop (47) and a second loop (48) which are interconnected by an interconnection device (49), the first loop (47) having on the one hand the fluid/fluid heat exchanger (34) and on the other hand the first component exchanger (51) and/or the second component exchanger (52), and the second loop (48) having on the one hand the radiator (69) and on the other hand the first component exchanger (51) and/or the third component exchanger (67), said first component exchanger (51) being integrated either in the first loop (47) or in the second loop (48).

2. Thermal conditioning device according to claim 1, wherein the first loop (47) comprises a first pump (50) for circulating the coolant.

3. Thermal conditioning device according to either claim 1 or claim 2, wherein the second loop (48) comprises a second pump (66) for circulating the coolant.

4. Thermal conditioning device according to any of claims 1 to 3, wherein the second loop (48) comprises a 41 bypass duct (81), referred to as the third bypass duct (81), of the radiator (69).

5. Thermal conditioning device according to any of the preceding claims, wherein the fluid/fluid heat exchanger (34) is installed in parallel with the evaporator (14).

6. Thermal conditioning device according to any of the preceding claims, wherein the refrigerant circuit (1) comprises a connection point (40), referred to as the fifth connection point (40), of the evaporator (14) and of the fluid/fluid heat exchanger (34).

7. Thermal conditioning device according to any of the preceding claims, wherein the refrigerant circuit (1) comprises a bypass duct (18), referred to as the first bypass duct (18), of the internal heat exchanger (11).

8. Thermal conditioning device according to any of the preceding claims, wherein the refrigerant circuit (1) comprises a bypass duct (25), referred to as the second bypass duct (25), of the external heat exchanger (28).

9. Thermal conditioning device according to any of the preceding claims, wherein an internal air stream (13) is channelled by a housing (12) in which the evaporator (14) and the internal heat exchanger (11) are arranged in order to be passed through by the internal air stream (13) before it is distributed in a passenger compartment of a vehicle.

10. Thermal conditioning device according to either claim 7 or claim 8, wherein the refrigerant circulates in the refrigerant circuit (1), successively in the compressor (3), the first bypass duct (18), the external heat exchanger (28) and/or the second 42 bypass duct (25), the evaporator (14) and/or the fluid/fluid heat exchanger (34) and the compressor (3).

11. Thermal conditioning device according to either claim 7 or claim 8, wherein the refrigerant circulates in the refrigerant circuit (1), successively in the compressor (3), the internal heat exchanger (11), the external heat exchanger (28) and/or the second bypass duct (25), the evaporator (14) and/or the fluid/fluid heat exchanger (34) and the compressor (3).

12. Thermal conditioning device according to either claim 7 or claim 8, wherein the refrigerant circulates in the refrigerant circuit (1), successively in the compressor (3), the internal heat exchanger (11) and/or the first bypass duct (18), the external heat exchanger (28) and/or the second bypass duct (25) and the compressor (3).

13. Thermal conditioning device according to any of claims 1 to 12, wherein the coolant circulates in the coolant circuit (2), successively in the first component exchanger (51), the interconnection device (49), the fluid/fluid heat exchanger (34), the second component exchanger (52) and the first component exchanger(51).

14. Thermal conditioning device according to any of claims 1 to 12, wherein the coolant circulates in the coolant circuit (2), successively in the second component exchanger (52), the interconnection device (49), the fluid/fluid heat exchanger (34) and the second component exchanger (52).

15. Thermal conditioning device according to claim 4, wherein the coolant circulates in the coolant circuit (2), 43 successively in the first component exchanger (51), the interconnection device (49), the third component exchanger (67), the radiator (69) and/or the third bypass duct (81), the interconnection device (49), the fluid/fluid heat exchanger (34), the second component exchanger (52) and the first component exchanger (51).

16. Thermal conditioning device according to claim 4, wherein the coolant circulates in the coolant circuit (2), successively in the interconnection device (49), the first component exchanger (51), the third component exchanger (67), the radiator (69) and/or the third bypass duct (81), the interconnection device (49), the fluid/fluid heat exchanger (34), the second component exchanger (52) and the interconnection device (49).
